# EUROPEAN PATENT APPLICATION

(11) **EP 4 588 543 A1**
(43) Date of publication of application: **23.07.2025**
(21) Application number: 23864637.6
(22) Date of filing: 08.09.2023
(51) Int. Cl.: A63F 13/211

(54) **DATA PROCESSING METHODS, APPARATUS, DEVICE, AND MEDIUM**

(30) Priority: 16.09.2022 CN 202211129259; 22.09.2022 CN 202211157713; 22.09.2022 CN 202211157841; 23.09.2022 CN 202211165882
(71) Applicant: Beijing Zitiao Network Technology Co., Ltd., Beijing 100190 (CN)
(72) Inventor: PENG, Cheng, Beijing 100028 (CN); WANG, Chuncheng, Beijing 100028 (CN)
(74) Representative: Dentons UK and Middle East LLP
(86) International application number: PCT/CN2023/117588
(87) International publication number: WO 2024/055905

(57) **Abstract**

The embodiments of the present disclosure relate to a data processing method, an apparatus, a device, and a medium. A data processing method comprises: determining an action position on the basis of a first action signal; determining a second action posture on the basis of a second action signal; and executing an operation instruction based on the action position and the second action posture. Another data processing method comprises: on the basis of a received action signal, determining a first action time and a first action posture; determining a target object, the object information of the target object being matched with the first action time and the first action posture; and playing a first processing effect corresponding to the target object. Another data processing method comprises: displaying in a virtual reality scene a trigger device and a target object; determining an action position on the basis of an action signal; determining a trigger time based on the action position and a position of the trigger device; determining the target object, object information of the target object being matched with the trigger time and the position of the trigger device; and playing an effect corresponding to the target object. Another data processing method comprises: determining an action position and an action speed direction on the basis of an action signal; determining a target object, object information of the target object being matched with the action position, and the object information comprising the object direction and object position; and, based on the action speed direction and a direction of the target object, playing an effect corresponding to the target object.

## Description

### CROSS-REFERENCE TO RELATED APPLICATIONS

The present application is based on and claims the priority to the Chinese patent application No. 202211129259.7 filed on September 16, 2022, the Chinese patent application No. 202211157713.X filed on September 22, 2022, the Chinese patent application No. 202211157841.4 filed on September 22, 2022, and the Chinese patent application No. 2022111658828 filed on September 23, 2022, the disclosures of which are incorporated herein in their entireties.

### TECHNICAL FIELD

The present disclosure relates to the technical field of data processing, and in particular, to various data processing methods and apparatuses, devices, and mediums.

### BACKGROUND

With the continuous development of virtual reality (VR) technology, interactions and games based on the virtual reality technology can bring senses of reality and participation to a user

In the related art, processing is usually performed using a handle as an input device, which is complex in processing result determination, low in processing efficiency, unrich in processing actions, and cannot meet use needs of the user.

In the related art, an object is usually knocked using a handle as an input device, which is complex in knocking result determination, low in processing efficiency, unrich in handle actions, and cannot meet use needs of the user.

In the related art, in a virtual reality space, it is difficult to perceive where and/or when an object is processed, resulting in a poor processing effect.

In the related art, the determination for virtual reality scene interaction results will result in inaccurate determination results, as well as inaccurate presentation of subsequent interaction effects, so that the user cannot prepare to know real interactions.

### SUMMARY

To solve or at least partially solve the above technical problems, the present disclosure provides various data processing methods and apparatuses, devices, and mediums.

An embodiment of the present disclosure provides a data processing method, comprising:
determining an action position on the basis of a first action signal;
determining a second action posture on the basis of a second action signal; and
executing an operation instruction based on the action position and the second action posture.

An embodiment of the present disclosure further provides a data processing apparatus, comprising:
a first determination module, configured to determine an action position on the basis of a first action signal;
a second determination module, configured to determine a second action posture on the basis of a second action signal; and
a processing module, configured to execute an operation instruction based on the action position and the second action posture.

An embodiment of the present disclosure provides another data processing method, comprising:
determining a first action time and a first action posture on the basis of a received action signal;
determining a target object, wherein object information of the target object is matched with the first action time and the first action posture; and
playing a first processing effect corresponding to the target object.

An embodiment of the present disclosure further provides another data processing apparatus, comprising:
a first determination module, configured to determine a first action time and a first action posture on the basis of a received action signal;
a second determination module, configured to determine a target object, wherein object information of the target object is matched with the first action time and the first action posture; and
a playing module, configured to play a first processing effect corresponding to the target object.

An embodiment of the present disclosure provides another data processing method, comprising:
displaying, in a virtual reality scene, a trigger device and a target object;
determining an action position on the basis of an action signal;
determining a trigger time based on the action position and a position of the trigger device;
determining the target object, wherein object information of the target object is matched with the trigger time and the position of the trigger device; and
playing an effect corresponding to the target object.

An embodiment of the present disclosure further provides another data processing apparatus, comprising:
a display module, configured to display, in a virtual reality scene, a trigger device and a target object;
a first determination module, configured to determine an action position on the basis of an action signal;
a second determination module, configured to determine a trigger time based on the action position and a position of the trigger device;
a third determination module, configured to determine the target object, wherein object information of the target object is matched with the trigger time and the position of the trigger device; and
a playing module, configured to play an effect corresponding to the target object.

An embodiment of the present disclosure further provides an electronic device, comprising: a processor; and a memory configured to store instructions executable by the processor, the processor being configured to read the executable instructions from the memory and execute the instructions to implement the data processing method according to the embodiment of the present disclosure.

An embodiment of the present disclosure further provides a computer-readable storage medium having thereon stored a computer program for executing the data processing method according to the embodiment of the present disclosure.

An embodiment of the present disclosure provides another data processing method, comprising:
determining an action position and an action velocity direction on the basis of an action signal;
determining a target object, wherein object information of the target object is matched with the action position, and the object information comprises an object direction and an object position; and
playing an effect corresponding to the target object based on the action velocity direction and a direction of the target object.

An embodiment of the present disclosure further provides another data processing apparatus, comprising:
a first determination module, configured to determine an action position and an action velocity direction on the basis of an action signal;
a second determination module, configured to determine a target object, wherein object information of the target object is matched with the action position, and the object information comprises an object direction and an object position; and
a playing module, configured to play an effect corresponding to the target object based on the action velocity direction and a direction of the target object.

An embodiment of the present disclosure further provides an electronic device, comprising: a processor; and a memory configured to store instructions executable by the processor, the processor being configured to read the executable instructions from the memory and execute the instructions to implement the data processing method according to any embodiment of the present disclosure.

An embodiment of the present disclosure further provides a computer-readable storage medium having thereon stored a computer program for executing the data processing method according to any embodiment of the present disclosure.

An embodiment of the present disclosure further provides a computer program product, comprising: instructions which, when executed by a processor, cause the processor to perform the data processing method according to any embodiment of the present disclosure.

An embodiment of the present disclosure further provides a computer program, comprising: instructions which, when executed by a processor, cause the processor to perform the data processing method according to any embodiment of the present disclosure.

### BRIEF DESCRIPTION OF THE DRAWINGS

The above and other features, advantages, and aspects of the embodiments of the present disclosure will become more apparent in conjunction with the accompanying drawings and referring to the following DETAILED DESCRIPTION. Throughout the drawings, the same or similar reference numbers refer to the same or similar elements. It should be understood that the drawings are schematic and that components and elements not necessarily drawn to scale.
Fig. 1 is a schematic flow diagram of a data processing method according to an embodiment of the present disclosure;
Fig. 2 is a schematic flow diagram of another data processing method according to an embodiment of the present disclosure;
Fig. 3 is a schematic diagram of an operation scene according to an embodiment of the present disclosure;
Fig. 4 is a schematic diagram of another operation scene according to an embodiment of the present disclosure;
Fig. 5 is a schematic structural diagram of a data processing apparatus according to an embodiment of the present disclosure;
Fig. 6 is a schematic structural diagram of an electronic device according to an embodiment of the present disclosure.
Fig. 7 is a schematic flow diagram of a data processing method according to an embodiment of the present disclosure;
Fig. 8 is a schematic flow diagram of another data processing method according to an embodiment of the present disclosure;
Fig. 9 is a schematic diagram of a reality scene and a virtual reality scene according to an embodiment of the present disclosure;
Fig. 10a is a schematic diagram of a stepping scene according to an embodiment of the present disclosure;
Fig. 10b is a schematic diagram of another stepping scene according to an embodiment of the present disclosure;
Fig. 10c is a schematic diagram of still other stepping scene according to an embodiment of the present disclosure;
Fig. 10d is a schematic diagram of still another stepping scene according to an embodiment of the present disclosure;
Fig. 10e is a schematic diagram of still another stepping scene according to an embodiment of the present disclosure;
Fig. 11 is a schematic diagram of a sound track area according to an embodiment of the present disclosure;
Fig. 12a is a schematic diagram of stepping on a short note according to an embodiment of the present disclosure;
Fig. 12b is schematic diagram of another example of stepping on a short note according to an embodiment of the present disclosure;
Fig. 12c is a schematic diagram of stepping on a long note according to an embodiment of the present disclosure;
Fig. 13 is a schematic structural diagram of a data processing apparatus according to an embodiment of the present disclosure;
Fig. 14 is a schematic flow diagram of a data processing method according to an embodiment of the present disclosure;
Fig. 15 is a schematic flow diagram of another data processing method according to an embodiment of the present disclosure;
Fig. 16a is a schematic diagram of displaying a trigger device and a target object according to an embodiment of the present disclosure;
Fig. 16b is schematic diagram of another example of displaying a trigger device and a target object according to an embodiment of the present disclosure;
Fig. 17 is a schematic diagram of acting on a target object according to an embodiment of the present disclosure;
Fig. 18 is a schematic diagram of a trigger device according to an embodiment of the present disclosure;
Fig. 19 is a schematic structural diagram of a data processing apparatus according to an embodiment of the present disclosure;
Fig. 20 is a schematic flow diagram of a data processing method according to an embodiment of the present disclosure;
Fig. 21 is a schematic flow diagram of another data processing method according to an embodiment of the present disclosure;
Fig. 22a is a schematic diagram of a trigger scene according to an embodiment of the present disclosure;
Fig. 22b is a schematic diagram of another trigger scene according to an embodiment of the present disclosure;
Fig. 23 is a schematic structural diagram of a data processing apparatus according to an embodiment of the present disclosure.

### DETAILED DESCRIPTION

Embodiments of the present disclosure will be described in more detail below with reference to the accompanying drawings. While certain embodiments of the present disclosure are shown in the drawings, it should be understood that the present disclosure may be implemented in various forms and should not be construed as limited to the embodiments set forth herein, which are provided for a more complete and thorough understanding of the present disclosure rather. It should be understood that the drawings and embodiments of the present disclosure are for illustration purposes only and are not intended to limit the scope of protection of the present disclosure.

It should be understood that various steps recited in method embodiments of the present disclosure may be performed in a different order, and/or performed in parallel. Furthermore, the method embodiments may include additional steps and/or omit performing the illustrated steps. The scope of the present disclosure is not limited in this respect.

The term "include" and variations thereof used herein are intended to be open-ended, i.e., "including but not limited to". The term "based on" is "at least partially based on". The term "one embodiment" means "at least one embodiment"; the term "another embodiment" means "at least one other embodiment"; and the term "some embodiments" means "at least some embodiments". Definitions related to other terms will be given in the following description.

It should be noted that the concepts "first", "second", and the like mentioned in the present disclosure are only used for distinguishing different devices, modules or units, and are not used for limiting the order or interdependence of functions performed by the devices, modules or units.

It should be noted that the modification of "a" or "a plurality" mentioned in the present disclosure is intended to be illustrative rather than restrictive, and that those skilled in the art should appreciate that it should be understood as "one or more" unless otherwise explicitly stated in the context.

Names of messages or information exchanged between a plurality of devices in the embodiments of the present disclosure are for illustrative purposes only, and are not intended to limit the scope of the messages or information.

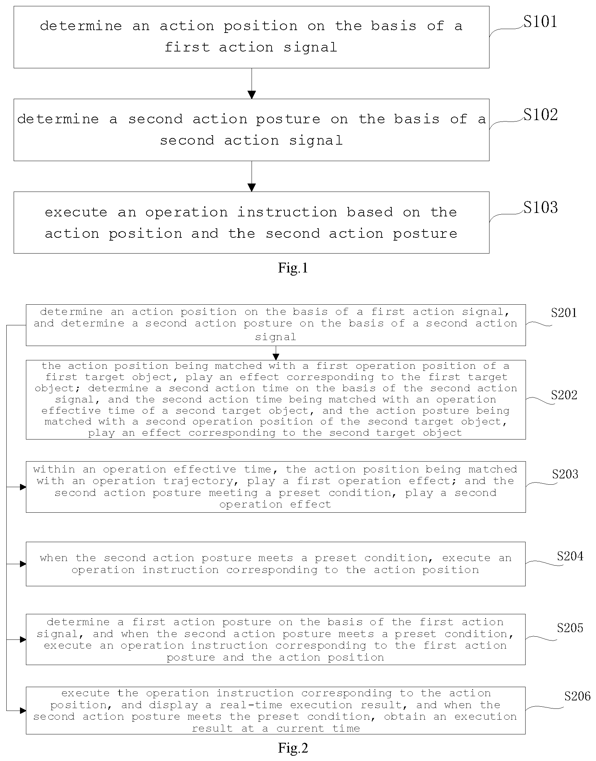

Fig. 1 is a schematic flow diagram of a data processing method according to an embodiment of the present disclosure, wherein the method may be executed by a data processing apparatus, and the apparatus may be implemented using software and/or hardware, and may be generally integrated in an electronic device.

Compared with the related art, the technical solution provided in the embodiment of the present disclosure has the following advantages: according to the data processing solution provided in the embodiment of the present disclosure, determining an action position on the basis of a first action signal, determining a second action posture on the basis of a second action signal, and executing an operation instruction based on the action position and the second action posture. With the above technical solution, by performing data processing according to a combination of different action signals, the data processing mode is richer and more interesting; and various data processing can be performed on the basis of more actions of a user, meeting the user's requirement for data processing diversity, and further improving the data processing effect.

The data processing method provided in the embodiment of the present disclosure can be applied to many application scenes, such as a virtual reality scene, wherein virtual reality includes at least visual perception, and may further include auditory perception, tactile perception, motion perception, and even taste perception, smell perception, and the like, to implement an integrated, interactive three-dimensional dynamic view of a virtual environment and simulation of an entity behavior, making the user immersed into a simulated virtual reality environment, and realizing applications in various virtual environments such as a map, a game, and a video.

In addition, a device for realizing the virtual reality effect may be typically a device such as glasses, a head-mounted display device, and contact lenses, to realize visual perception and other forms of perception, and of course, the virtual reality device is not limited thereto and may be subjected to a further miniaturized or large-scaled design as needed.

As shown in Fig. 1, the method comprises:
step 101, determining an action position on the basis of a first action signal.

The first action signal is, for example, a six-degree-of-freedom signal (degrees of freedom of movement in directions of three rectangular coordinate axes x, y, and z and degrees of freedom of rotation around the three coordinate axes), for example, an action signal sent by a user by controlling an external device such as operating a handle, including a position and posture of the handle. Alternatively, position(s) and posture(s) of an external device (such as a head display device) and/or another external device(such as a handle) which are, by means of image identification, calculated by the external device based on image(s) of an environment and/or the other external device acquired by the external device may be taken as the first action signal. The action position may refer to a corresponding position of the external device in a virtual reality scene, and the action posture may be a corresponding posture of the external device in the virtual reality scene. For example, the handle is mapped to a virtual hand in virtual reality, and a position of the hand is the action position; or based on a position and posture of the handle, a ray corresponding to the position and posture of the handle can be displayed in virtual reality, so as to execute a corresponding instruction based on a direction of the ray; or the head display device is, in virtual reality, mapped into a virtual camera acquiring and displaying virtual reality content, a gaze point is determined based on a position and posture of the virtual camera, and a corresponding instruction can be executed according to placement of the gaze point.

In the embodiment of the present disclosure, there are many manners of determining the action position on the basis of the first action signal, wherein in some implementations, the position of the external device is obtained on the basis of the first action signal, and the action position is determined in virtual reality based on the position of the external device; and in other implementations, the position and posture of the external device are obtained on the basis of the first action signal, and the action position is determined in virtual reality based on the position and posture of the external device.

The above two manners are merely examples of determining the action position on the basis of the first action signal, and the manner of determining the action position on the basis of the first action signal is not specifically limited in the embodiment of the present disclosure.

It should be noted that one or more first action signals may be obtained according to needs of an application scene, the number of the action position being the same as that of the first action signals.

Step 102, determining a second action posture on the basis of a second action signal.

The second action signal refers to an action signal generated by the user wearing an action tracking device to perform actions, for example, a three-degree-of-freedom signal (where three degrees of freedom refer to degrees of freedom with three rotation angles). In the embodiment of the present disclosure, the action tracking device may be a leg tracking device, for example, the leg tracking device may be worn on both left and right legs of a user, and the data processing device (for example, a virtual reality device) is connected with the leg tracking device and receives a second action signal sent by the leg tracking device in real time; the action tracking device may also be a head tracking device, a waist tracking device, a hand tracking device, or the like, which is specifically selected and set according to an application scene, and is not specifically limited in the embodiment of the present disclosure.

Further, on the basis of the second action signal, the second action posture is determined. The second action may be a stepping action, a kicking action, or the like, and is specifically set according to an application scene; as an example, the second action is a stepping action, and the second action posture is a posture of the stepping action. The second action posture refers to a body action posture of the user, such as a posture of stepping action and a posture of kicking action. According to different tracking devices, the action posture can also be nodding, head shaking, waist twisting (a posture of waist twisting), jumping and the like.

In the embodiment of the present disclosures, there are many manners of determining the second action posture on the basis of the second action signal, and in some implementations, the second action signal comprises: a time stamp, an acceleration signal, and an angular velocity signal; and the second action posture is determined on the basis of the time stamp, the acceleration signal, and the angular velocity signal.

In other implementations, the action signal comprises: a time stamp, an acceleration signal, an angular velocity signal, and a magnetometer signal; and the second action posture is determined on the basis of the time stamp, the acceleration signal, the angular velocity signal, and the magnetometer signal.

The above two manners are only examples of determining the second action posture on the basis of the second action signal, and the specific implementation of determining the second action posture on the basis of the second action signal is not limited in the embodiment of the present disclosure.

It should be noted that, one or more second action signals may be obtained according to needs of an application scene, the number of the second action posture being the same as that of the second action signals.

It should be noted that, the foregoing steps 101 and 102 may be independent steps, and the order thereof is not limited in the present disclosure.

Step 103, executing an operation instruction based on the action position and the second action posture.

The operation instruction in the present disclosure may be various interactive or non-interactive instructions, such as a control instruction, a setting instruction, and a display instruction, including but not limited to enabling a virtual object (such as striking a note, a virtual user dancing), selecting a virtual object (such as selecting a picture, text content), editing a virtual object (such as editing a picture, video, and text content,), displaying a virtual content (such as displaying a picture, text content), or controlling various external devices (such as a handle, a head-mounted display device) to be turned on or off, calibrated, or vibrate, sound, or the like.

In the embodiment of the present disclosure, there are many manners of executing an operation instruction based on the action position and the second action posture; in some implementations, a first operation instruction is executed based on the action position, and a second operation instruction is executed based on the second action posture, that is, the first operation instruction is executed based on the action position determined by the first action signal, and the second operation instruction is executed based on the second action posture determined by the second action signal; the first operation instruction and the second operation instruction are independent operation instructions, so that it is possible to execute the first operation instruction first and then the second operation instruction, or execute the second operation instruction first and then the first operation instruction, or execute the first operation instruction and the second operation instruction simultaneously, for example, the first operation instruction and the second operation instruction may be temporally discrete (striking the first note first and then the second note, or striking the second note first and then the first note), or the first operation instruction and the second operation instruction may be executed simultaneously (striking the first note and the second note simultaneously).

In other implementations, an operation instruction corresponding to the action position and the second action posture is executed, that is, one operation instruction is jointly determined by the action position and a position corresponding to the second action posture, for example, an operation control, such as a page turning control, is determined by an action position, and a confirmation is made by a second action posture such as stamping, so that a final operation instruction is to turn a plurality of pages (for example, turn two pages).

The above two manners are merely examples of executing the operation instruction based on the action position and the second action posture, and the specific implementation of executing the operation instruction based on the action position and the second action posture is not limited in the embodiment of the present disclosure.

According to the data processing solution provided in the embodiment of the present disclosure, an action position is determined on the basis of a first action signal, a second action posture is determined on the basis of a second action signal, and an operation instruction is executed based on the action position and the second action posture. With the above technical solution, by performing data processing based on a combination of different action signals, the data processing mode is richer and more interesting; and various data processing can be performed on the basis of more actions of a user, meeting the user's requirement for data processing diversity, and further improving the data processing effect.

In some embodiments, the method further comprises: determining a first action posture on the basis of the first action signal; and the executing the operation instruction based on the action position and the second action posture comprises: executing the operation instruction based on the action position, the first action posture, and the second action posture.

In the embodiment of the present disclosure, the first action signal is, for example, a six-degree-of-freedom signal, for example, an action signal sent by a user by controlling an external device, such as operating handle, including a position and posture of the handle, and position(s) and posture(s) of an external device (such as a head display device) and/or another external device (such as a handle) which are, by means of image identification, calculated by the external device based on image(s) of an environment and/or the other external device acquired by the external device may also be taken as the first action signal. The action position may refer to a corresponding position of the external device in a virtual reality scene, and the action posture may be a corresponding posture of the external device in the virtual reality scene. Therefore, the corresponding action position and first action posture may be identified on the basis of the first action signal.

In the embodiment of the present disclosure, in order to further improve accuracy and diversity of data processing, the operation instruction is executed based on the action position, the first action posture and the second action posture, for example, the first operation instruction is executed based on the first action position and the first action posture, and the second operation instruction is executed based on the second action posture, and for another example, an operation instruction corresponding to the action position, the first action posture, and the second action posture is executed.

In the above solution, the first action posture is further obtained, and the operation instruction is executed based on the action position, the first action posture, and the second action posture, further improving diversity and accuracy of data processing, and meeting use needs of the user.

In some implementations, the method further comprises: determining the first action signal based on action data of a first device; and determining the second action signal based on action data of a second device.

In the embodiment of the present disclosure, the first action signal and the second action signal are respectively from different devices, for example, the first action signal determined based on the action data of the first device may be an action signal which may be sent by a user through an external device such as a handle, including a position and posture of the handle, and position(s) and posture(s) of an external device (such as a head display device) and/or another external device (such as a handle) which are, by means of image identification, calculated by the external device based on image(s) of an environment and/or the other external device acquired by the external device may also be taken as the first action signal.

For another example, the second action signal is generated by wearing an action tracking device to perform actions, wherein the action tracking device may be a leg tracking device, a waist tracking device, a hand tracking device, and the like, which is specifically selected and set according to an application scene, and is not specifically limited in the embodiment of the present disclosure. The second action signal is determined based on the action data of the second device, for example, based on one or more action data of a time stamp, acceleration signal, angular velocity signal, magnetometer signal, etc. generated by an inertial sensor of the second device. Because the second device can only provide a three-degree-of-freedom signal or only provide an action posture, a conventional inertial sensor is enough, with a low requirement for hardware and lower cost.

In the above solution, the first action signal and the second action signal are respectively determined from action data of different devices, so that data processing is made at least by the two devices, thereby enriching richness of processed actions and diversity of processed scenes, and meeting use needs of the user.

In some implementations, the executing an operation instruction based on the action position and the second action posture comprises: executing a first operation instruction based on the action position, and executing a second operation instruction based on the second action posture.

Specifically, the first operation instruction is executed on the basis of the action position determined by the first action signal, the second operation instruction is executed on the basis of the second action posture determined by the second action signal; the first operation instruction and the second operation instruction are independent operation instructions, so that it is possible to execute the first operation instruction first and then the second operation instruction, or execute the first operation instruction and the second operation instruction simultaneously.

As a possible implementation, the first operation instruction corresponds to first display content of a display device, the first display content being determined based on a position and posture of the display device, and the second operation instruction corresponds to second display content of the display device, the second display content being determined based on the posture of the display device, or the second display content being display content at a preset position.

In the embodiment of the present disclosure, the display device may be a head-mounted display device, the first operation instruction is executed on the basis of the action position determined by the first action signal, and the first action signal here is a six-degree-of-freedom signal; it can be understood that as the worn display device moves in a reality space, the position and posture of the display device continuously change, and the first display content of the display device that corresponds to the first operation instruction also correspondingly changes, for example, as the worn display device moves forward in the reality space (for example, an indoor room space, a car interior space), the first display content (virtual space) is also updated and displayed based on a position and posture of the display device after the movement.

In the embodiment of the present disclosure, the second operation instruction is executed on the basis of the second action posture determined by the second action signal, and the second action signal here is a three-degree-of-freedom signal; it can be understood that as the worn display device moves in the reality space, a position and posture of the display device continuously change. The second display content of the display device that corresponds to the second operation instruction may change with the change in the posture of the display device, while a spatial position or relative horizontal position with respect to the display device does not change, for example, the second display content, such as a virtual track and an operation control, may move in the virtual space with the worn display device (i.e., first perspective of view of the user), and a display state may change with the change in the posture of the display device, for example, for a head-lowering posture, the virtual track stereoscopically changes a display color, deforms, and/or changes a display position, and the like. The second display content may also be preset content, such as a preset virtual object, which may not change with the change in the position and posture of the display device, and may be, in a preset form, displayed at a fixed position displayed by the display device.

Therefore, when the operation instruction corresponds to the display content of the display device, it is possible to control, according to needs of an application scene, updating display of the display content according to the position and/or posture of the display device, or fixed display of the display content; it can be understood that, in a same display interface, it is possible to control updating display of some display content (the first display content) according to the position and posture of the display device and control fixed display of some display content (the second display content) simultaneously; it can also be understood that, in a same display interface, it is possible to control updating display of some display content (the first display content) according to the position and posture of the display device and control updating display of some display content (the second display content) according to the posture of the display device simultaneously, thereby meeting flexible control of the display content of the display device, further meeting use needs of the user, and improving use experience of the user.

As another possible implementation, the action position is matched with a first operation position of a first target object, an effect corresponding to the first target object is played; a second action time is determined on the basis of the second action signal, wherein the second action time is matched with an operation effective time of a second target object and the action posture is matched with a second operation position of the second target object, and an effect corresponding to the second target object is played.

The second action time refers to a time point of an action, and more specifically, a target position can be determined according to the action posture, and a time point when the action being at the target position is recorded as the second action time.

In the embodiment of the present disclosure, there are many manners of determining the second action time on the basis of the second action signal, and in some implementations, the action signal comprises: a time stamp, an acceleration signal, and an angular velocity signal; and the second action time is determined on the basis of the time stamp, the acceleration signal, and the angular velocity signal.

In the embodiment of the present disclosure, operation positions (the first operation position, the second operation position, etc.) corresponding to different application scenes are different, for example, in a music game scene, the operation position refers to a note position; and for another example, in an interface operation scene, the operation position refers to a control button position or a control icon position, etc.

Specifically, if the action position is matched with the first operation position of the first target object, an effect corresponding to the first target object may be played, for example, text information and an operation score that correspond to an operation result are displayed, and/or a display state of the first target object is switched, for example, to a crushed state.

Specifically, when the second action time is matched with the operation effective time and the action posture is matched with the second operation position, an effect corresponding to the second target object is played, for example, text information and an operation score that correspond to an operation result are displayed, and/or a display state of the first target object is switched, for example, to a crushed state.

For example, in a virtual reality game scene, an action position identified by the first action signal is directly or indirectly interacted with a first target object A, thereby triggering the first target object A to display a score 1 and control the first target object A to be in a crushed state simultaneously; a position corresponding to an action posture identified by the second action signal is directly or indirectly interacted with a second target object B, thereby triggering the second target object B to display a score 2 and control the second target object B to be in a crushed state simultaneously.

Therefore, by different action signals acting on different target object, respectively, processing diversity is improved while improving richness of actions, meeting use needs of a user and improving use experience of the user.

As another possible implementation, the action position being matched with an operation trajectory within an operation effective time, a first operation effect is played, and the second action posture meeting a preset condition within the operation effective time, a second operation effect is played.

In the embodiment of the present disclosure, an operation prompt identification is displayed within the operation effective time.

Specifically, the operation prompt identification, such as an arrow identification, is displayed within the operation effective time, to prompt the user of an action direction, that is, controlling a prop and the like to move according to the operation prompt identification.

In the embodiment of the present disclosure, a position identification associated with the action position is displayed.

Specifically, the position identification associated with the action position, such as a prop icon, is displayed to prompt the user of specific movement of the action position.

For example, action times are all within an operation effective time, and a trajectory of an action position is matched with a movement trajectory, for example, moving upwards and downwards 2 times, a first operation effect is played, such as displaying an operation score and playing a sound effect, and a second action posture meets a preset condition, such as a right foot moving rightwards, a second operation effect is played, such as displaying an operation score and playing a sound effect.

It can be understood that, the first action signal and the second action signal can be obtained discretely and alternatively, so that the action position and the second action posture can be also matched discretely and alternatively, and therefore, the first operation effect and the second operation effect appear discretely and alternatively; the first action signal and the second action signal can be obtained simultaneously, so that the action position and the second action posture can be matched simultaneously, and therefore, the first operation effect and the second operation effect can appear simultaneously, which are specifically selected and set according to an application scene.

In the above solution, operations are experienced through different action signals, respectively, thereby improving processing accuracy, meeting use needs of a user, and improving use experience of the user.

In some implementations, the executing an operation instruction based on the second action posture and the action position comprises: executing an operation instruction corresponding to the action position and the second action posture.

Specifically, one operation instruction is jointly determined by the action position and a position corresponding to the second action posture, that is, the operation result is jointly controlled by the action position and the second action posture.

As a possible implementation, when the second action posture meets a preset condition, an operation instruction corresponding to the action position is executed, or when the second action posture meets a preset condition, an operation instruction corresponding to the action position and the position corresponding to the second action posture is executed.

As an example, based on the action position, a target position, such as a picture, a page turning control, and a menu returning control, is determined, and when the second action posture meets a preset condition, such as stepping on the spot and stamping leftwards, an operation instruction corresponding to the action position, such as image zooming-in and page turning operation, is executed. The preset condition may be set as needed, for example, only stepping or stamping is enough, and for another example, stepping rightwards, that is, the position corresponding to the second action posture should correspond to a preset position. For example, a rightward page turning control is determined by an action position, and a position corresponding to the second action posture corresponds to a preset right second action track, then an operation of turning two pages rightwards is executed.

As another possible implementation, a first action posture is determined on the basis of the first action signal, and the executing an operation instruction corresponding to the action position and the second action posture comprises: when the second action posture meets a preset condition, executing an operation instruction corresponding to the first action posture and the action position.

As an example, for example, an aiming posture is determined based on the first action posture, a target position is determined as X based on the action position, and when the second action posture meets a preset condition, such as stepping on the spot and stamping leftwards, an operation instruction corresponding to the first action posture and the action position is executed, such as shooting for the target position X.

As a further possible implementation, the executing an operation instruction corresponding to the action position and the second action posture comprises: executing an operation instruction corresponding to the action position to display a real-time execution result, and when the second action posture meets a preset condition, obtaining an execution result at a current time.

As an example, for example, based on an action position, a target position is determined, such as rotating and zooming-in , and rotating and zooming-in results are displayed in real time, and when the second action posture meets a preset condition, such as stepping on the spot and stamping leftwards, rotating and zooming-in results at the current time are obtained.

It should be noted that, an operation instruction associated with the position corresponding to the second action posture may be preset, for example, stepping leftwards by a left leg corresponding to forward page turning/returning, stepping rightwards by a right leg corresponding to backward page turning/continuing, tilting leftwards simultaneously by both legs corresponding to rotating a lens /picture clockwise, tilting rightwards simultaneously by both legs corresponding to rotating a lens/picture counterclockwise, jumping and falling by both legs corresponding to calling out a shortcut menu, or the like, which are specifically selected and set according to an application scene. Therefore, the interface operation result can be rapidly displayed through the position corresponding to the second action posture, further improving data processing efficiency, and greatly improving experience of a user in operating by using any action.

In the above solution, the operation purpose is jointly realized by the action position identified by the first action signal and the position corresponding to the action posture identified by the second action signal, thereby reducing related settings, and further improving convenience of the operation.

Fig. 2 is a schematic flow diagram of another data processing method according to an embodiment of the present disclosure, and this embodiment further optimizes the above data processing method on the basis of the above embodiment. As shown in Fig. 2, the method comprises:
step 201, determining an action position on the basis of a first action signal, and determining a second action posture on the basis of a second action signal.

The step 201 is the same as the steps 101 to 102, specifically referring to the description of steps 101 to 102, which will not be repeated here.

In addition to the step 201, at least one of step 202, step 203, step 204, step 205, or step 206 may be also performed, Fig. 2 being merely an example.

In the embodiment of the present disclosure, a first operation instruction may be executed based on the action position, and a second operation instruction may be executed based on the second action posture.

In the embodiment of the present disclosure, the first operation instruction corresponds to first display content of a display device, the first display content being determined based on a position and posture of the display device, and the second operation instruction corresponds to second display content of the display device, the second display content being determined based on the posture of the display device, or the second display content being display content at a preset position.

It can be understood that, the display device may be a head-mounted display device, and in a same virtual reality interface, may display the first display content and/or the second display content, wherein the first display content may be a virtual environment space, such as a meeting room space and a game room space, and as the display device moves in a reality space, a real-time position and posture of the display device are obtained, and the first display content (virtual environment space) is updated and displayed based on the real-time position and posture of the display device.

The second display content may be a virtual object at the preset position, such as a virtual track, a control button, or another content; as the display device moves in the reality space, the second display content such as the virtual track and the control button remains unchanged at the preset position; in order to further meet interaction experience, the second display content can be controlled to change based on the posture of the display device, for example, a head raising posture controlling deformation of the virtual track.

Step 202, the action position being matched with a first operation position of a first target object, playing an effect corresponding to the first target object, determining a second action time on the basis of the second action signal; the second action time being matched with an operation effective time of a second target object, and the action posture being matched with a second operation position of the second target object, playing the effect corresponding to the second target object.

It can be understood that, two sets of operation objects may be provided for a user to operate, and the two sets of operation objects require the user to control a first device (for example, a six-degree-of-freedom device) and a second device (for example, a three-degree-of-freedom device) in the reality world, respectively, to control related control devices (for example, props) to operate the operation objects respectively by sending action signals, to obtain operation results (for example, an operation score, switching a display state of the operation object, or the like). The time sequence of sending the action signals by the first device and the second device is not specifically limited, and may be selected and set according to an application scene.

It should be noted that, without limitations on the setting of the two sets of operation objects, three or more sets of operation objects may be set according to an application scene, and corresponding action signals can be set for operation, for example, two sets of operation objects are operated by two different six-degree-of-freedom devices (such as a head display device and a handle), and one set of operation objects are operated by a three-degree-of-freedom device (such as a leg action tracking device).

For example, in a virtual reality game scene, there are two sets of target objects: a first target object that can be interacted with a first device, such as a hand object X1, and a second target object that can be interacted with a second device, such as a foot area object X2; a user controls, by moving the first device such as a handle to send a first action signal, a control device such as a prop M in the virtual reality game scene, to directly or indirectly interact with the hand object X1, thereby eliminating the hand object X1.

The user controls, by moving a leg/foot/waist action tracking device of the second device to send a second action signal, a control device such as a prop N in the virtual reality game scene, to directly or indirectly interact with the foot area object X2, thereby eliminating the foot area object X2.

It should be noted that the prop M will not have any logical interaction with the foot area object X2, and the prop N will not have any logical interaction with the hand object X1.

Step 203, within an operation effective time, the action position being matched with an operation trajectory, playing a first operation effect, and the second action posture meeting a preset condition, playing a second operation effect.

In the embodiment of the present disclosure, an operation prompt identification is displayed within the operation effective time.

In the embodiment of the present disclosure, a position identification associated with the action position is displayed.

Specifically, in the virtual reality scene, areas A1 and A2 are provided; the user controls a six-degree-of-freedom device to transmit an action signal to control a hand model of a virtual user or a prop in the virtual reality scene or the like, to move in a virtual space, and the user needs to control the prop or the hand model of the virtual user or the like, to complete a preset action in the area A1 within the operation effective time, thereby playing the first operation effect. The action can be completed if the prop or the hand model of the virtual user or the like, is retained in the area A1, or it is required that the prop or the hand model of the virtual user or the like, completes movement in a specific direction in the area A1, or the like.

In addition, the user controls, by controlling the three-degree-of-freedom leg/foot/waist action tracking device or the like, the prop or the foot model of the virtual user to complete a corresponding action within the operation effective time, thereby playing the second operation effect. The second action posture may be obtained by data such as acceleration and angular velocity for each timestamp of the three-degree-of-freedom device, thereby determining the second action posture such as stepping, raising, and moving.

For example, the area A1 requires the prop or the hand model of the virtual user to move upwards and downwards 2 times, and during the completion of the action, it is required that a position of the prop or the hand model of the virtual user is in the area A1 throughout, and similarity comparison on a movement trajectory of the prop or the hand model of the virtual user with a set movement trajectory is performed; in addition, within an operation effective time when a right foot action prompt is lighted in the area A2, it is required to raise the right foot and step down to complete the action; or when moving rightwards is prompted, the right foot is controlled to move rightwards, and the like. The determination of the action in the area A2 does not require that the prop is located in the area A2.

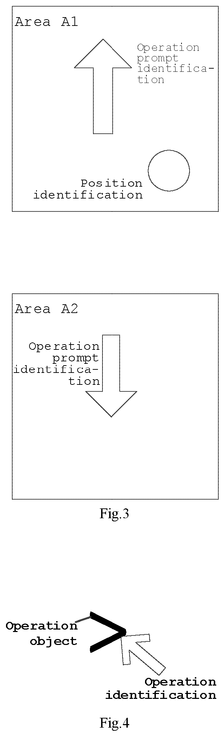

Exemplarily, Fig. 3 is a schematic diagram of an operation scene according to an embodiment of the present disclosure; as shown in Fig. 3, an area A1, i.e., a six-degree-of-freedom operation area, and an area A2, i.e., a three-degree-of-freedom operation area, are included; an operation prompt identification being displayed as an upward arrow identification in the area A1, is for indicating that a user should control a six-degree-of-freedom device to move upwards during the operation prompt, and a position identification associated with an action position being displayed as a circle identification in the area A1, is for representing a prop controlled by the six-degree-of-freedom device and indicating that a current position needs to be retained in the area A1 to complete the action of moving upwards.

In Fig. 3, the area A2, i.e., a three-degree-of-freedom operation area, is further included; an operation prompt identification being displayed as a downward arrow identification in the area A2, is for indicating that the user should control a three-degree-of-freedom device to step downward during the operation prompt, and the operation can be completed if there is a recognition of a stepping posture of the user at any position.

Step 204, when the second action posture meets a preset condition, executing an operation instruction corresponding to the action position.

Step 205, determining a first action posture on the basis of the first action signal, and when the second action posture meets a preset condition, executing an operation instruction corresponding to the first action posture and the action position.

Step 206, executing the operation instruction corresponding to the action position, displaying a real-time execution result, and when the second action posture meets the preset condition, obtaining an execution result at a current time.

Specifically, a combination of the first action signal (six-degree-of-freedom signal) and the second action signal (three-degree-of-freedom signal) is used, and an operation is jointly implemented using the two action signals.

Exemplarily, Fig. 4 is a schematic diagram of another operation scene according to an embodiment of the present disclosure, wherein turning a plurality of pages once can be realized, without the need to design a button of turning a plurality of pages for the user to click, thereby further improving convenience of the operation.

Specifically, as shown in Fig. 4, an operation object is ">", and an operation identification is displayed as an arrow identification; an action position identified based on the first action signal acts on the operation identification, and at the same time, a position corresponding to an action posture (for example, a posture of stepping on the spot) identified on the basis of the second action signal meets a preset condition, such as a stepping position being an origin or a stepping target position being a right second track, then an operation instruction of turning a plurality of pages (for example, turning two pages) is executed. It is easily understood that, when a ray emitted from a handle points at a control, especially when pointing at a very small control, triggering the control by a button on the handle may cause that a position and posture of the handle change so that it no longer points at the above control, and at this time, accurate trigger of the control can be realized through the second action signal of another device while maintaining the handle still, the same also occurring in a shooting-like scene.

Therefore, it is possible to perform operation on two sets of operation objects by two different action signals (such as a six-degree-of-freedom signal and a three-degree-of-freedom signal), respectively, or to perform operation on one operation object by a combination of two different action signals, and to perform operation by one action signal (such as a three-degree-of-freedom signal) alone, improving convenience of the operation.

The data processing solution provided in the embodiment of the present disclosure comprises, determining an action position on the basis of a first action signal, and determining a second action posture on the basis of a second action signal; the action position being matched with a first operation position of a first target object, playing an effect corresponding to the first target object; determining a second action time on the basis of the second action signal, the second action time being matched with an operation effective time of a second target object, and the action posture being matched with a second operation position of the second target object, playing an effect corresponding to the second target object; within an operation effective time, the action position being matched with an operation trajectory, playing a first operation effect, and the second action posture meeting a preset condition, playing a second operation effect; when the second action posture meets the preset condition, executing an operation instruction corresponding to the action position; determining a first action posture on the basis of the first action signal, and when the second action posture meets a preset condition, executing an operation instruction corresponding to the first action posture and the action position; executing an operation instruction corresponding to the action position, displaying a real-time execution result, and when the second action posture meets a preset condition, obtaining an execution result at a current time. With the above solution, the operation purpose is realized by a combination of the action position identified by the first action signal and the position corresponding to the action posture identified by the second action signal, thereby reducing related settings, further improving convenience of the operation, and different action signals can act on different target objects, respectively, thereby improving operation diversity while improving richness of actions, or different action signals respectively act on a same target object, thereby improving accuracy of the operation; in addition, an interface operation result can be displayed rapidly by the position corresponding to the action posture, further improving data processing efficiency and greatly improving experience of the user in operating by using any action.

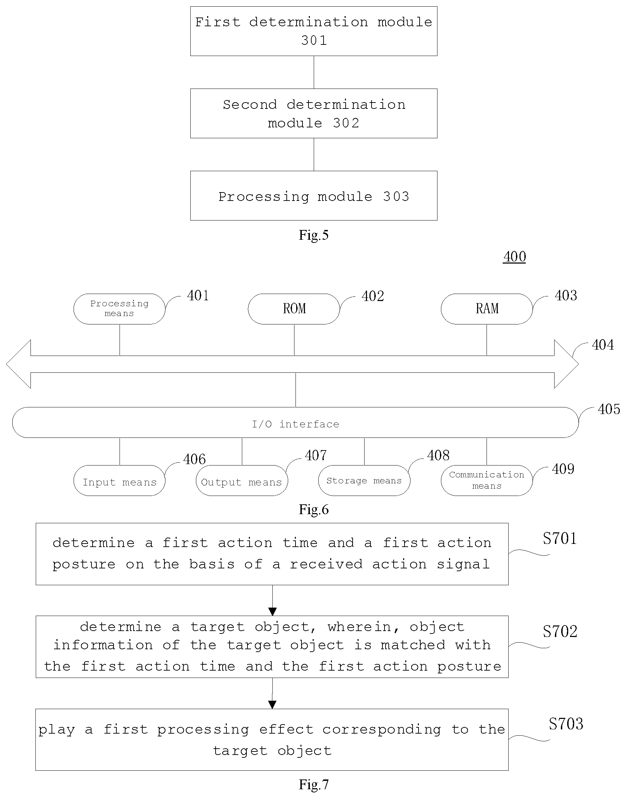

Fig. 5 is a schematic structural diagram of a data processing apparatus according to an embodiment of the present disclosure; the apparatus may be implemented by software and/or hardware, and may be generally integrated in an electronic device. As shown in Fig. 5, the apparatus comprises:
a first determination module 301, configured to determine an action position on the basis of a first action signal;
a second determination module 302, configured to determine a second action posture on the basis of a second action signal; and
a processing module 303, configured to execute an operation instruction based on the action position and the second action posture.

In some embodiments, the first action signal is a six-degree-of-freedom action signal; and/or the second action signal is a three-degree-of-freedom action signal.

In some embodiments, the apparatus further comprises:
a third determination module, configured to determine a first action posture on the basis of the first action signal; and
the processing module 303 is specifically configured to:
   execute the operation instruction based on the action position, the first action posture, and the second action posture.

In some embodiments, the apparatus further comprises:
a fourth determination module, configured to determine the first action signal based on action data of a first device; and
a fifth determination module, configured to determine the second action signal based on action data of a second device.

In some embodiments, the processing module 303 comprises:
a first execution unit, configured to execute a first operation instruction based on the action position; and
a second execution unit, configured to execute a second operation instruction based on the second action posture.

In some embodiments, the first operation instruction corresponds to first display content of a display device, the first display content being determined based on a position and posture of the display device; and
the second operation instruction corresponds to second display content of the display device, the second display content being determined based on the posture of the display device, or the second display content being display content at a preset position.

In some embodiments, the first execution unit is specifically configured to:
the action position being matched with a first operation position of a first target object, play an effect corresponding to the first target object;
the apparatus further comprises:
   a sixth determination module, configured to determine a second action time on the basis of the second action signal; and
   the second execution unit is specifically configured to:
      the second action time being matched with an operation effective time of a second target object, and the action posture being matched with a second operation position of the second target object, play an effect corresponding to the second target object.

In some embodiments, the first execution unit is specifically configured to: the action position being matched with an operation trajectory within an operation effective time, play a first operation effect; and
the second execution unit is specifically configured to: the second action posture meeting a preset condition within the operation effective time, play a second operation effect.

In some embodiments, the apparatus further comprises:
a first display module, configured to display an operation prompt identification within the operation effective time.

In some embodiments, the apparatus further comprises:
a second display module, configured to display a position identification associated with the action position.

In some embodiments, the processing module 303 further comprises:
a third execution unit, configured to execute an operation instruction corresponding to the action position and the second action posture.

In some embodiments, the third execution unit is specifically configured to:
when the second action posture meets a preset condition, execute an operation instruction corresponding to the action position; or
the apparatus further comprises:
   a seventh determination module, configured to determine a first action posture on the basis of the first action signal; and
   the third execution unit is specifically further configured to:
      when the second action posture meets a preset condition, execute an operation instruction corresponding to the first action posture and the action position.

In some embodiments, the third execution unit is specifically further configured to:
execute an operation instruction corresponding to the action position, and display a real-time execution result; and
when the second action posture meets a preset condition, obtain an execution result at a current time.

The modules described above may be implemented as software components executed on one or more general-purpose processors, or may be implemented as hardware for performing certain functions, such as programmable logic devices and/or application specific integrated circuits. In some embodiments, these modules may be embodied in a form of a software product, which may be stored in non-volatile storage media. These non-volatile storage media include causing a computer device (e.g., a personal computer, server, network device, mobile terminal, etc.) to perform the method described in the embodiment of the present disclosure. In some embodiments, the modules described above may also be implemented on a single device or distributed across a plurality of devices. The functions of these modules may be combined with each other, or further divided into a plurality of sub-modules.

In a practical application, an object is knocked by using a handle as an input device, a knock result is determined according to six-degree-of-freedom data; there has high requirements for tracking a position and posture of the handle, often with the need for combining image identification in addition to an inertial signal, and the process of determining the knock result is complex, with the need for both the spatial position and posture meeting the requirements; in addition, action experience is not so rich that the user is limited when interaction, and movement requirements of the user for many actions cannot be met.

In view of the above problems, an embodiment of the present disclosure provides a data processing method comprising: determining a first action time and a first action posture on the basis of a received action signal; determining a target object, wherein object information of the target object is matched with the first action time and the first action posture; and playing a first processing effect corresponding to the target object. Therefore, by identifying the action posture according to the received action signal, determining the target object according to a position corresponding to the action posture and playing the corresponding processing effect, the position corresponding to the action posture can be rapidly identified and the target object is determined on the basis of the simple action signal only, so that the data processing efficiency is further improved, and experience of a user in interaction by using any action is greatly enhanced.

Fig. 7 is a schematic flow diagram of a data processing method according to an embodiment of the present disclosure, wherein the method may be executed by a data processing apparatus, and the apparatus may be implemented by using software and/or hardware, and may be generally integrated in an electronic device. As shown in Fig. 7, the method comprises:
step 701, determining a first action time and a first action posture on the basis of a received action signal.

The action signal refers to a signal generated by a user wearing an action tracking device to perform actions, for example, a three-degree-of-freedom signal (three degrees of freedom refers to degrees of freedom with 3 rotation angles). In the embodiment of the present disclosure, the action tracking device may be a leg tracking device, for example, a user may wear the leg tracking device on both left and right legs. A data processing device (for example, a virtual reality device) is connected with the leg tracking device and receives an action signal sent by the leg tracking device in real time. The action tracking device may also be a waist tracking device, a hand tracking device, a head tracking device, and the like, which is specifically selected and set according to an application scene, and is not limited in the embodiment of the present disclosure.

Further, the first action time and the first action posture are determined on the basis of the action signal. A first action may be a stepping action, a kicking action, etc., specifically set according to an application scene; as an example, the first action is a stepping action, and the first action posture is a posture of the stepping action. The first action posture refers to a body action posture of the user, such as a stepping action posture and a kicking action posture, and the first action time refers to a time point of the action, and more specifically, a target position can be determined based on the action posture, and a time point when the action is at the target position is recorded as the action time.

In the embodiment of the present disclosures, there are many manners of determining the first action time and the first action posture on the basis of the received action signal; in some implementations, the action signal comprises: a time stamp, an acceleration signal, and an angular velocity signal, and the first action time and the first action posture are determined on the basis of the time stamp, the acceleration signal, and the angular velocity signal.

In other implementations, the action signal comprises: a time stamp, an acceleration signal, an angular velocity signal, and a magnetometer signal, and the first action time and the first action posture are determined on the basis of the time stamp, the acceleration signal, the angular velocity signal, and the magnetometer signal.

The above two manners are merely examples of determining the first action time and the first action posture on the basis of the received action signal, and the specific implementation of determining the first action time and the first action posture on the basis of the received action signal is not limited in the embodiment of the present disclosure.

Step 702, determining a target object, wherein object information of the target object is matched with the first action time and the first action posture.

When object information of an object is matched with the first action time and the first action posture, the object is the target object; the target object may be in different shapes, such as a note and a circle, which is specifically selected and set according to an application scene, and is not specifically limited in the embodiment of the present disclosure. The object information includes an object position, an action effective time, and the like, the corresponding object information being specifically set according to the object.

In the embodiment of the present disclosure, there are many manners of determining the target object; in some implementations, the object information comprises a first action effective time and an object position, and when the first action time is matched with the first action effective time, and the first action posture is matched with the object position, determining that the object is the target object.

In other implementations, the object information comprises a first action effective time, a second action effective time, and an object position, the first action time being matched with the first action effective time, and the first action posture being matched with the object position, as well as on the basis of a received action signal again, determining a second action time and a second action posture, and when the second action time is matched with the second action effective time, and the second action posture is matched with the object position, determining that the object is the target object.

The above two manners are merely examples of determining the target object, and the manner of determining the target object is not specifically limited in the embodiment of the present disclosure.

Step 703, playing a first processing effect corresponding to the target object.

In the embodiment of the present disclosure, the first processing effect may be personalized according to requirements of an application scene, further meeting use needs of the user.

In the embodiment of the present disclosure, there are many manners of playing the first processing effect corresponding to the target object; in some implementations, a sound effect corresponding to the target object is played and/or a display state of the target object is switched, for example, the sound effect corresponding to the target object is played and an object shape of the target object is switched to a crushed state simultaneously; in other implementations, a sound effect corresponding to the target object is played and/or a preset light effect is displayed, for example, the sound effect corresponding to the target object is played and a strong light effect is displayed simultaneously.

The above two manners are merely examples of playing the first processing effect corresponding to the target object, and the specific implementation of playing the first processing effect corresponding to the target object is not limited in the embodiment of the present disclosure.

The data processing solution provided in the embodiment of the present disclosure comprises: determining a first action time and a first action posture on the basis of a received action signal; determining a target object, wherein object information of the target object is matched with the first action time and the first action posture; and playing a first processing effect corresponding to the target object. With the above technical solution, by identifying the action posture according to the received action signal, determining the target object according to a position corresponding to the action posture and playing the corresponding processing effect, the position corresponding to the action posture can be rapidly identified and the target object can be determined on the basis of the simple action signal only, so that the data processing efficiency is further improved, and experience of the user in interaction by using any action is greatly improved.

In some implementations, the data processing method is applied to a head-mounted display device, and further comprises: displaying, in a virtual reality scene, the target object, a ground of the virtual reality scene being aligned with that of a reality scene.

The head-mounted display device is, for example, virtual reality glasses, and the virtual reality scene may be any virtual reality scene related to an action rhythm, for example, a music game, an object stepping game, and the like. The ground of the virtual reality scene is aligned with that of the reality scene, and after an action is performed for the ground of the reality scene by wearing the body tracking device, feedback can be generated in the virtual reality scene, so that action height information in the virtual reality scene is kept consistent with the ground of the reality scene. The target object is a virtual object in the virtual reality scene, and can be different virtual objects, such as notes and circles.

In the embodiment of the present disclosure, there are many manners of displaying the target object in the virtual reality scene; as an example, the virtual reality scene may include an object flowing area, the object flowing area includes a plurality of object tracks, for example, four object tracks, different object tracks include one or more objects, and an object type of the object may vary and is specifically determined according to the object, for example, when the object is a note, the note may be a short note or long note. It can be understood that different virtual reality scenes may correspond to different action rhythms, and therefore, the object tracks in the object flowing area, the object type the and number of the objects corresponding to each object track, and a generation time, movement velocity, etc. of each object, are preset according to the action rhythms of the different virtual reality scenes.

In the above solution, by an action acting on the target object in the virtual reality scene, a human-computer interaction goal in the virtual reality scene can be achieved, so that experience of the user in gaming by using any action in the virtual reality scene can be greatly improved.

In some embodiments, the virtual reality scene comprises a virtual object, and the method further comprises: controlling display of the virtual object on the basis of the action signal.

In some embodiments, an action signal sent by an action tracking device is received.

The number of the virtual objects keeps consistent with the number of real users, and specific features such as character of the virtual object can be reconstructed on the basis of three-dimensional scanning for the user in real time, or selected by the user at the beginning of the virtual reality scene, or randomly allocated by a virtual reality device, or the like, which can be specifically set according to different application scenes.

For example, in a reality scene, a user wears an action tracking device, and acting (for example, stepping) on the ground is, by a wireless communication system, converted into an action signal of the body (for example, left and right feet), which is transmitted to a virtual reality device for processing; the virtual reality device processes the action signal to control a virtual object in the virtual reality scene to complete an action of the body (for example, left and right feet), and the action of the virtual object hits a target object within the virtual reality scene, to complete game experience.

Specifically, the user controls the action tracking device to generate an action signal by moving, raising, dropping a foot, and the like, such that in the game, acting on the ground is matched with the target object, to complete the game experience.

Specifically, the action position may be determined based on the first action posture, for example, an object track in an action area, on which an action is performed at a first action time, is the action position, i.e. the action posture corresponds to the position in the virtual reality scene, so that the action position may be determined by obtaining an action angle on the basis of the action posture. Therefore, it is possible to obtain, on the basis of the action posture, a change in the position of the action tracking device with respect to its initial position, further improving accuracy of a result of subsequent target object action.

Specifically, an action angle may be determined based on the first action posture. The action angle refers to a relative angle between a position before the action and a position after the action, and therefore, a change in the angle of the action tracking device with respect to the initial position is obtained, further improving accuracy of a result of subsequent target object action.

In the embodiment of the present disclosure, an associated object of the object is displayed on the ground of the virtual reality scene, the associated object being associated with the object position.

In the embodiment of the present disclosure, a display state of the associated object at the position corresponding to the first action posture is switched.

Specifically, a corresponding associated object is set according to the object, the associated object being associated with the object position (such as the object track to which the object position belongs), for example, it is determined that the action is in a first object track, then a display state of the first object track is in a first color (a different color may be set according to a scene, such as yellow), and for another example, it is determined that the action is in a second object track, then a display state of the second object track is in a second color (a different color may be set according to a scene, such as blue).

In the above solution, by displaying an action consistent with that of the real user in the virtual reality scene simultaneously, a sense of participation of the user is further improved, and therefore use experience of the virtual reality scene is improved, and based on the position corresponding to the action posture, the display state of the associated object is switched in real time to prompt the user, further improving control experience of the virtual reality scene.

In some embodiments, the action signal comprises: a time stamp, an acceleration signal, and an angular velocity signal, and the determining the first action time and the first action posture on the basis of the received action signal comprises: determining the first action time and the first action posture on the basis of the time stamp, the acceleration signal, and the angular velocity signal.

In some embodiments, the action signal further comprises: a magnetometer signal, and the method further comprises: determining the first action time and the first action posture on the basis of the time stamp, the acceleration signal, the angular velocity signal, and the magnetometer signal.

In the embodiment of the present disclosure, posture data of the user may be acquired in real time by one or more inertial sensors mounted on the action tracking device, for example, the inertial sensor including a gyroscope and accelerometer, or including a gyroscope, accelerometer, and magnetometer.

Specifically, the posture data is acquired by using two or three inertial sensors, and the first action time and the first action posture are calculated by data fusion; as an example, the inertial sensor includes a gyroscope and an accelerometer, which acquire an acceleration signal and angular velocity signal for each timestamp, and fusion calculation is performed on the acceleration signal and magnetometer signal for each timestamp to obtain the first action time and the first action posture.

As another example, the inertial sensor includes a gyroscope, an accelerometer, and a magnetometer, which acquire an acceleration signal, angular velocity signal, and magnetometer signal for each timestamp, and fusion calculation is performed on the acceleration signal, the angular velocity signal, and the magnetometer signal for each timestamp to obtain the first action time and the first action posture.

In the above solution, the corresponding action posture data is acquired by selecting two or three inertial sensors, thereby improving accuracy of the capture of the action posture, and further improving interaction experience of the user in the virtual reality scene.

In some embodiments, the object information comprises a first action effective time and an object position, and the determining the target object comprises: the first action time being matched with the first action effective time, and the first action posture being matched with the object position, determining that the object is the target object.

In the embodiment of the present disclosure, the object information further comprises a second action effective time, and the method further comprises: determining a second action time and a second action posture on the basis of the received action signal, and when the second action time is matched with the second action effective time and the second action posture is matched with the object position, playing a second processing effect corresponding to the target object.

Specifically, the object flowing area is an area within which when the object moves, the action signal is not fed back. It can be understood that different object types include different corresponding object information, and therefore, for different physical information, determination for an effective action may be different.

Specifically, when the object information comprises the first action effective time and the object position, the first action time is matched with the first action effective time, and the first action posture is matched with the object position, it is determined that the object is the target object.

In the embodiment of the present disclosure, the target object is displayed at the first action effective time at the object position.

Specifically, a first object track is determined on the basis of the object position, and a first trigger area is displayed in the first object track within the first action effective time; wherein, the first trigger area refers to an effective trigger area displayed in the first object track after the action, that is, after the target object is determined based on the first action time and the first action posture (i.e., a position corresponding to the first action posture), the target object is right in the first trigger area while the first trigger area is displayed.

Specifically, the object is right in the first trigger area while the first trigger area is displayed, by determining that a first action effective time range of the first trigger area is, for example, -200ms to +200ms, if the first action time is within the first action effective time range, it may be confirmed that the object is the target object. A specific size of the first trigger area can be set according to an application scene, that is, the first action effective time range can also be set according to a specific application scene, thereby meeting use needs of different users. Therefore, after the target object is determined based on the action time and the action posture (i.e., the position corresponding to the action posture), the target object is right in the trigger area while the trigger area is displayed, thereby further improving subsequent object playing effects.

Specifically, when the object information further comprises a second action effective time, a second action time and a second action posture are determined on the basis of the received action signal, and when the second action time is matched with the second action effective time and the second action posture is matched with the object position, a second processing effect corresponding to the target object is played.

Specifically, after the user acts, he needs to keep still for a certain period of time before acting again, so that the action position is continuously in contact with the object and then the object can be effectively matched. As an example, the object is a long note, which includes an initial note (initial position of the note), a note band (note band for position matching with the action tracking device), and an end note (note in the end, which is used for determining whether the user completes the note), that is, if a first action posture is matched with the initial note within a first action effective time range, an initial hit can be determined; it is necessary to continue to complete the note band and the end note, that is, after the action, if the action tracking device remains still for a certain duration, an object band can be hit, and a second action posture is obtained again; if the second action posture is matched with the end note within a second action effective time range, a final hit can be determined. Therefore, by means of the two action postures, it is determined that the object is the target object, and a second processing effect corresponding to the target object is played, thereby further improving the object playing effect.

In the embodiment of the present disclosure, the action signal is a three-degree-of-freedom signal; it is possible to identify the action posture based on the received action signal and determine the target object based on the position corresponding to the action posture; there are low operation requirements for the action tracking device and the head-mounted display device, and the correspondence between the action posture and the position is introduced, so that the target object can be determined based on the position corresponding to the action posture only from the three-degree-of-freedom data, reducing data processing efficiency while ensuring accuracy of the data processing, and ensuring use experience of the user.

In the embodiment of the present disclosure, an action score for the target object is determined on the basis of the first action time and the first action effective time and displayed.

If, the first action effective time of the target object, for example, an effective time when the target object appears in a trigger area, is in a range of -200ms to +200ms, when the target object just reaches the trigger area, for example, at - 200ms, the first action time is right a time when the target object just reaches the trigger area, thereby determining that the action score for the target object is 60; for another example, if an effective time when the target object appears in a trigger area is -200ms to +200ms, when the target object completely coincides with the trigger area, for example, at 0ms, the first action time is right a time when the target object just reaches the trigger area, thereby determining that the action score for the target object is 100.

In the above solution, the action score for the target object is determined on the basis of the first action time and the first action effective time and displayed, further visually providing the action result, so that the user is prompted to continue maintaining the rhythm to act or adjust the action rhythm in real time, thereby improving the action effect and use experience of the user.

In some embodiments, playing an object effect corresponding to the target object comprises: playing a sound effect corresponding to the target object and/or switching a display state of the target object.

The sound effect refers to a sound corresponding to the target object, that is, a corresponding object rhythm is played, and/or a display state of the target object is changed, for example, the target object can be switched to a state of crushed object, which can be specifically set according to an application scene.

In the above solution, the sound effect corresponding to the target object is played and/or the display state of the target object is switched, so that the user knows the action result in real time and use experience is further improved.

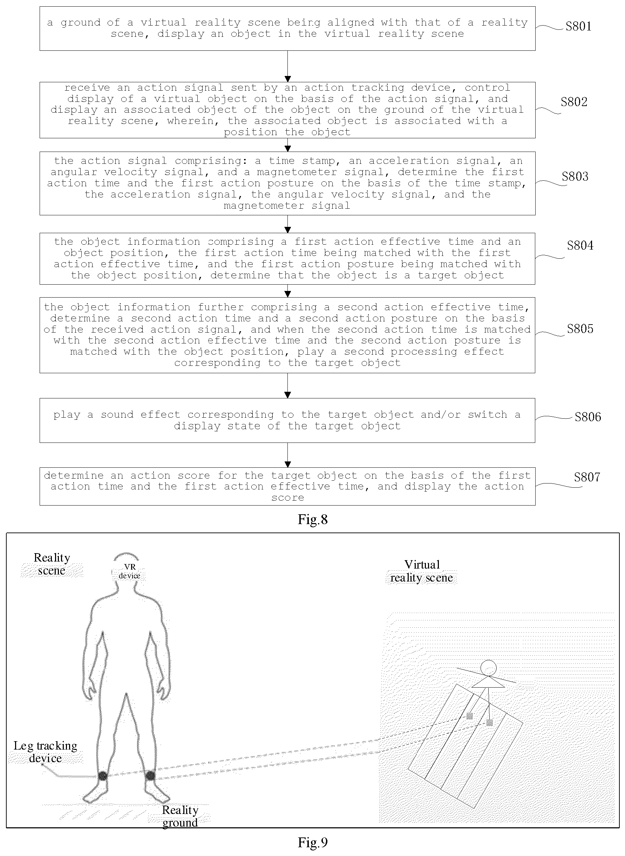

Fig. 8 is a schematic flow diagram of another data processing method according to an embodiment of the present disclosure; this embodiment further optimizes the above data processing method on the basis of the above embodiment. As shown in Fig. 8, the method is applied to a head-mounted display device, comprising:
step 801, a ground of a virtual reality scene being aligned with that of a reality scene, displaying an object in the virtual reality scene;
step 802, receiving an action signal sent by an action tracking device, controlling display of a virtual object on the basis of the action signal, and displaying an associated object of the object on the ground of the virtual reality scene, wherein, the associated object is associated with an object position;
step 803, the action signal comprising: a time stamp, an acceleration signal, an angular velocity signal, and a magnetometer signal, determining a first action time and a first action posture on the basis of the time stamp, the acceleration signal, the angular velocity signal, and the magnetometer signal.

Exemplarily, Fig. 9 is a schematic diagram of a reality scene and a virtual reality scene according to an embodiment of the present disclosure, as shown in Fig. 9, in the virtual reality scene, a user stands on a reality ground with a VR device and an action tracking device worn; in the virtual reality scene, a virtual object stands in an action area, and when the user is in a static state and the action tracking device does not change, a position of the virtual object in the virtual reality scene is not changed. A same height parameter in the reality scene will be transferred to the virtual reality scene.

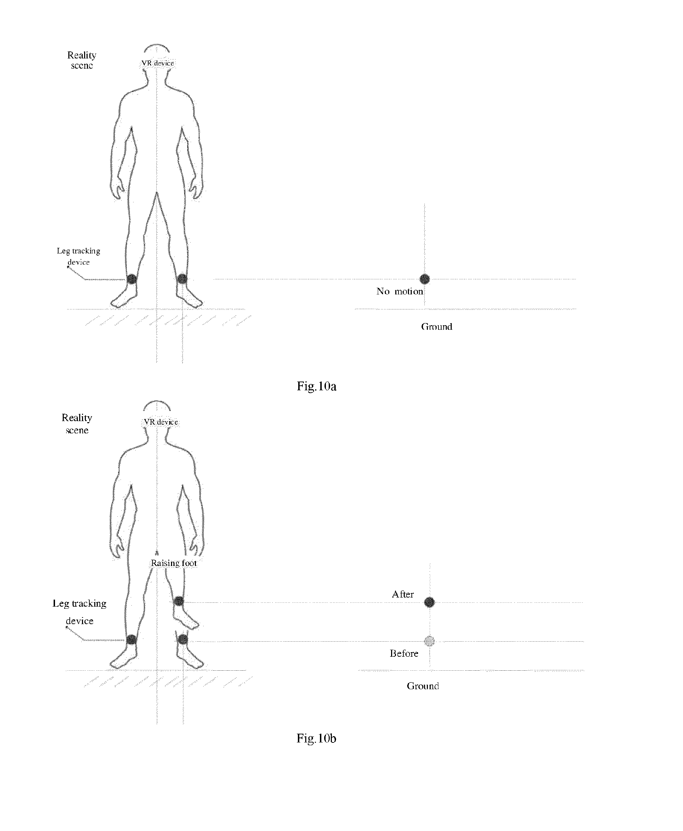

Exemplarily, taking an example that the action is a stepping action and the action tracking device is a leg tracking device, Fig. 10a is a schematic diagram of a stepping scene according to an embodiment of the present disclosure, wherein when a user stands normally, based on a timestamp, an acceleration signal, an angular velocity signal, and a magnetometer signal acquired by the leg tracking device, it can be learned that, when the leg tracking device remains unchanged, the virtual object maintains, in the virtual scene, a standing state which is a posture of the stepping action.

Exemplarily, Fig. 10b is a schematic diagram of another stepping scene according to an embodiment of the present disclosure, wherein an action posture and action time of the user can be identified based on a timestamp, acceleration signal, angular velocity signal, and magnetometer signal acquired by the leg tracking device worn by the user, that is, the action time is determined after an action of the user is identified based on an angular velocity and an acceleration, for example, if the angular velocity and acceleration acquired by the leg tracking device suddenly change, raise of a foot of the user can be identified based on the angular velocity and the acceleration, and the virtual object in the virtual reality scene simultaneously performs an action of raising a foot, that is, a posture of the stepping action of the virtual object is in a state of raising the foot but not yet stepping.

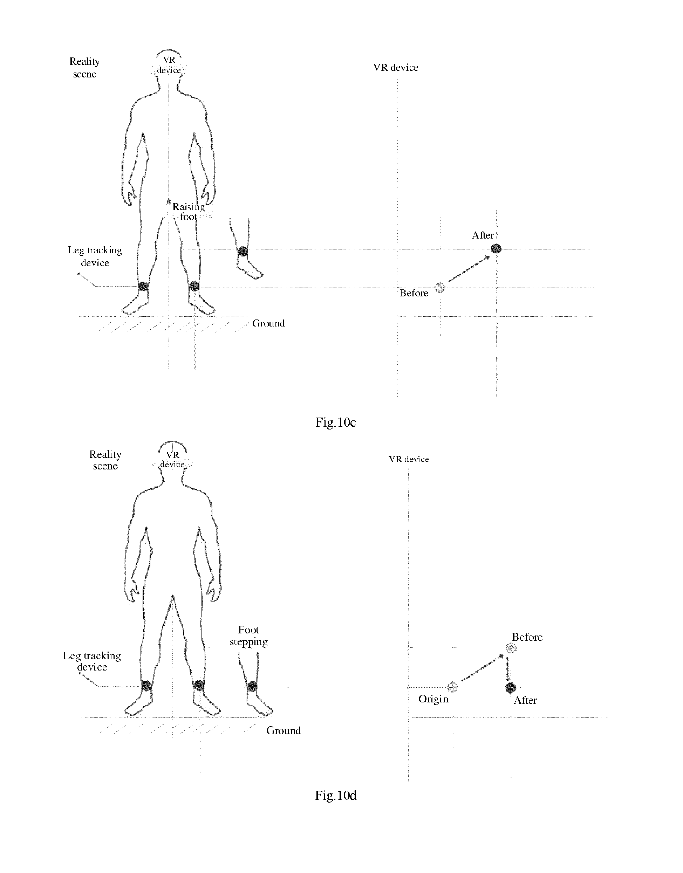

Exemplarily, Fig. 10c is a schematic diagram of still another stepping scene according to an embodiment of the present disclosure, wherein an action posture and an action time of the user can be identified based on a timestamp, acceleration signal, angular velocity signal, and magnetometer signal acquired by the leg tracking device worn by the user, for example, it is obtained that the angular velocity and acceleration of the leg tracking device in the reality scene both change, and it is identified based on results of the changes in the angular velocity and the acceleration that a position of a leg of the user is shifted leftward, then a posture of the stepping action of the virtual object in the virtual reality scene is the foot shifted toward a leftmost object track, so that a display state of an associated object (object track) at a position corresponding to the stepping action posture is switched, and the object track can be changed, in color, from the previous object track to a new object track.

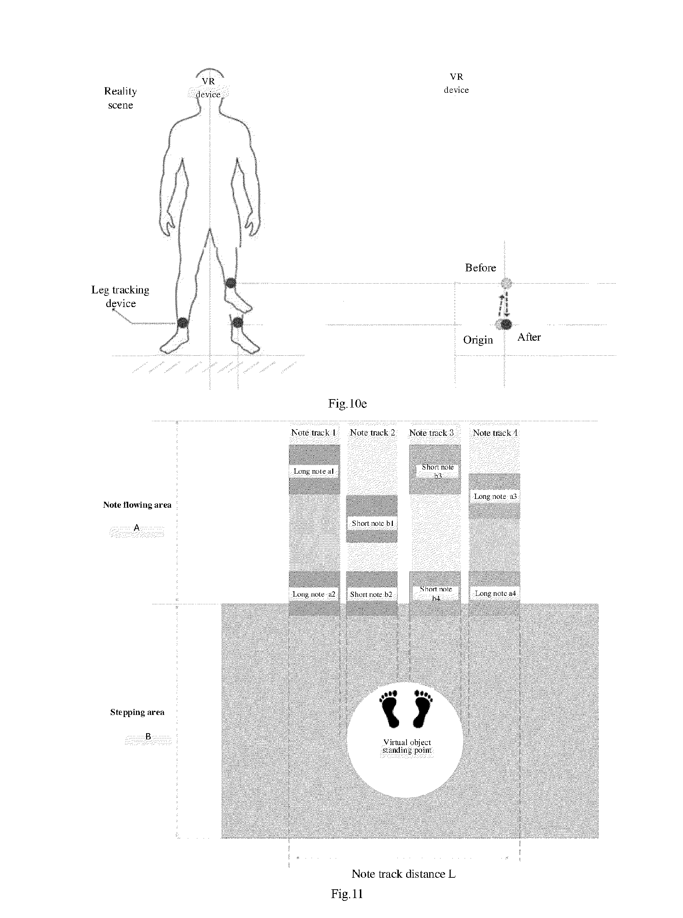

Exemplarily, Fig. 10d is a schematic diagram of still another stepping scene according to an embodiment of the present disclosure, wherein an action posture and action time of the user can be identified based on a timestamp, acceleration signal, angular velocity signal, and magnetometer signal acquired by the leg tracking device worn by the user, for example, it is obtained that an angular velocity and acceleration of the leg tracking device both change, and it is identified based on results of changes in the angular velocity and the acceleration that a change in the action of the leg of the user is, for example, stepping on the spot, as shown in Fig. 10e: the posture of the stepping action of the virtual object in the VR scene is consistent with that of the stepping action of the leg of the user in the reality scene, after the stepping action of the user is identified based on the angular velocity and the acceleration, a time of the stepping action is determined, so that when stepping onto the ground, there is a corresponding state change (such as a color change) in the stepping area, i.e. the floor, and the stepping is completed.

It should be noted that the above magnetometer signal may be used for calibrating angular velocity and acceleration data, further improving accuracy of identification of the action posture and action time, thereby improving subsequent use experience of the user.

It should be noted that, after stepping on the floor, the leg tracking device is repositioned, and as shown in Fig. 10d, a new origin can be clearly obtained to determine a next stepping.

As an example of a scene, in a virtual reality scene, four object tracks are included, a user stands with both legs in the middle of the four object tracks, for example, the user steps vertically downwards with the right leg, and it is determined based on the action posture that it corresponds to a third object track; for another example, if the user steps obliquely rightwards with the right leg, the action posture corresponds to a fourth object track; it should be noted that the action posture corresponds to the object track, and if stepping on the third object track is determined based on a position corresponding to the action posture, even if the user moves his leg horizontally rightwards and then steps vertically, he will not step on the fourth object track. Therefore, the object track can be uniquely determined from the position corresponding to the action posture, further improving accuracy of determination of the action result, and further improving use experience of the user.

Step 804, the object information comprising a first action effective time and an object position, the first action time being matched with the first action effective time, and the first action posture being matched with the object position, determining that the object is a target object.

Step 805, the object information further comprising a second action effective time, determining a second action time and a second action posture on the basis of the received action signal, and when the second action time is matched with the second action effective time and the second action posture is matched with the object position, playing a second processing effect corresponding to the target object.

In the embodiment of the present disclosure, the target object is displayed at the first action effective time at the object position.

Exemplarily, taking an example that an action is a stepping action and an object is a note, Fig. 11 is a schematic diagram of a sound track area according to an embodiment of the present disclosure, wherein a schematic diagram of one sound track area is presented in the figure, the sound track area includes a note flowing area A and a stepping area B; there are 4 note tracks, divided into left two ones (note tracks 1 and 2) and right two ones (note tracks 3 and 4), and after stepping on the stepping area is determined, a prompt may be triggered and "stay effect" will be displayed, for example, yellow for a left leg and blue for a right leg, to prompt the user of stepping on the stepping area as well as different note tracks.

Specifically, the note appears in a distance of the note flowing area and moves to the stepping area according to a beat, and in the case where there is a virtual object, the note moves to an area where both feet of the virtual object can touch, so that a note track distance needs to be set, for example, a note track distance L shown in Fig. 11, usually greater than about 1 meter, for example, 1.1 meters, which can be specifically dynamically adjusted according to different users, further meeting stepping experience of the users.

It is also presented in Fig. 11 that the note track 1 in the note flowing area includes long notes a1 and a2; the note track 2 includes short notes b1 and b2; the note track 3 includes short notes b3 and b4; and the note track 4 includes long notes a3 and a4. The short note is a step and hit note, and the long note is a note for which the user needs to maintain still after stepping on it, so that a foot is in continuous contact with continuous notes and then raised again to complete the stepping on the long note.

It can be understood that the number of notes at a note birth point may be 4; the note birth point is the same as a birth point of another note, but needs to be close to the ground and move along a parallel track; a movement velocity of the note may be set according to an application scene, and the note has a small area at birth, and becomes larger continuously as moving to the stepping area, for example, from a size of the note at birth that is scaled by 50% of a target size, to 100% of the target size when moving to the stepping area, that is, moving from the note birth position at a position with approximately close to 20% offset (XY plane) a track center to a final position (X, Y) when it moves to the stepping area.

Specifically, the user steps on the ground in reality, after the stepping, activates a trigger area of the virtual reality scene, and hits a note in the trigger area.

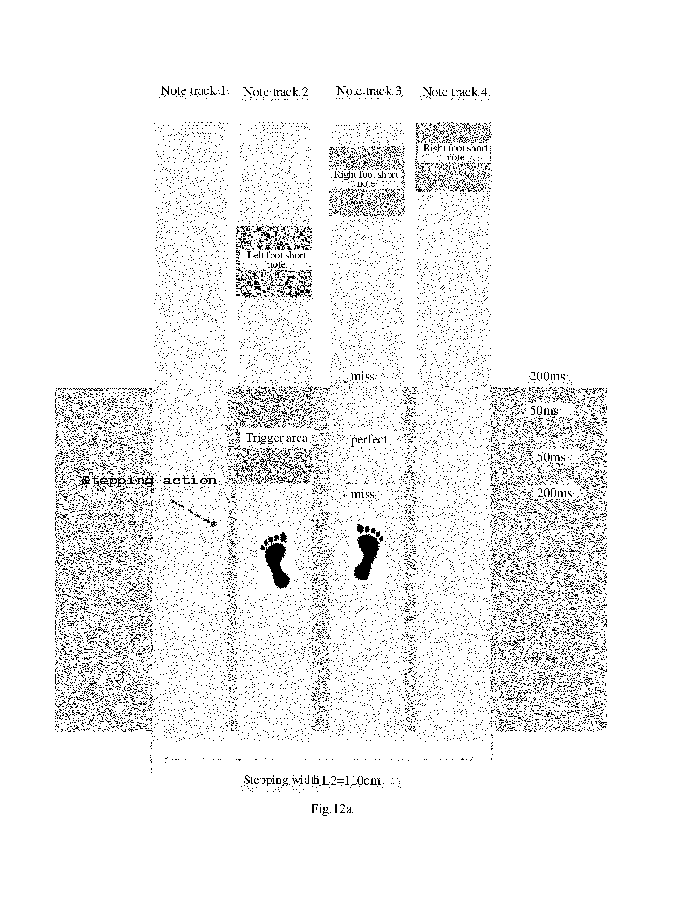

Exemplarily, Fig. 12a is a schematic diagram of stepping on a short note according to an embodiment of the present disclosure; as shown in Fig. 12a, when a left foot steps on a note track 2, a trigger area is displayed, a note does not reach the trigger area, so that the left foot, after completing the stepping, has not struck the note yet. Fig. 12a shows feedback display after the stepping, and at this time, the note is not hit. Fig. 12a also shows that a stepping width L2 is 110cm, the note track 2 includes a left foot short note, and note tracks 3 and 4 both include a right foot short note, as well as "miss" and "perfect".

It should be noted that, when the note does not reach the trigger area, the left foot steps on the ground; a stepping time when the note enters the trigger area and the note is completely hit is T=0; if the note is hit within a stepping effective time range, for example, T=[200, -200] ms, an initial hit can be determined.

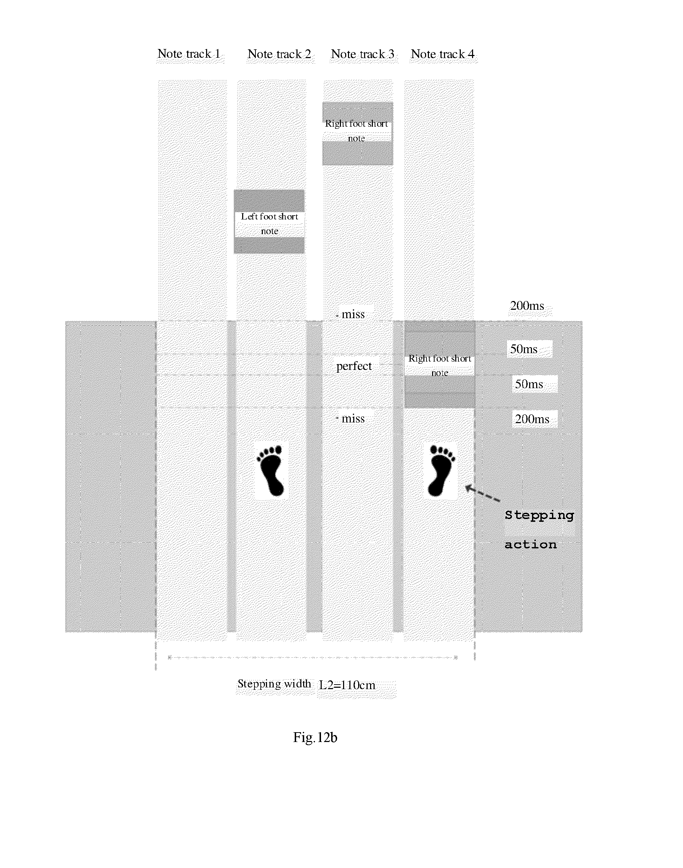

Exemplarily, Fig. 12b is another schematic diagram of stepping on a short note according to an embodiment of the present disclosure; as shown in Fig. 12b, when a right foot steps on a note track 4, a trigger area is displayed, after completing the stepping, the right foot has struck the note; when the note reaches the trigger area, the right foot steps on the ground, and a right foot short note is within the trigger area, it is determined that a stepping time that a struck note is completely hit is T=0; and if the note is hit within a stepping effective time range, for example, T=[200, -200] ms, an initial hit can be determined. Fig. 12b also shows that a stepping width L2 is 110cm, a note track 2 includes a left foot short note, note tracks 3 and 4 both include a right foot short note, as well as "miss" and "perfect".

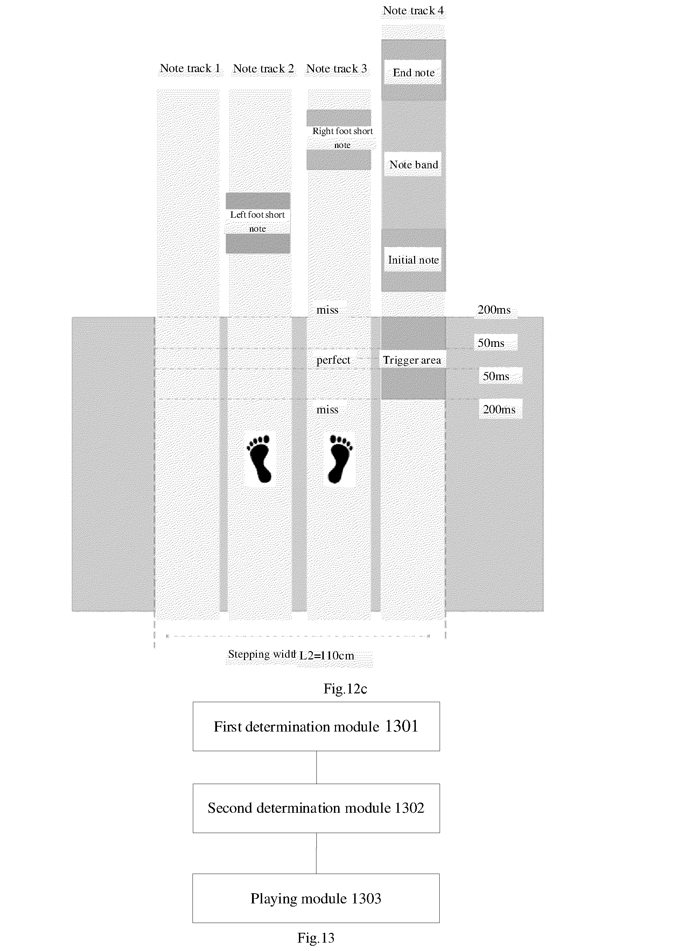

Exemplarily, Fig. 12c is a schematic diagram of stepping on a long note according to an embodiment of the present disclosure; as shown in Fig. 12c, when an initial note reaches a trigger area, a right foot steps on the ground, a right foot short note is within the trigger area, it is determined that a time that a struck note is completely hit is T=0, and if the note is hit within a stepping effective time range, for example, T=[200, -200] ms, an initial hit can be determined, and there is a need to continue with a note band and an end note; the user is required to perform a stepping action to step onto the initial note. Fig. 12c also shows that a stepping width L2 is 110cm, a note track 2 includes a left foot short note, a note track 3 includes a right foot short note, and a note track 4 includes a right foot long note, as well as "miss" and "perfect".

Specifically, after the stepping, if the position of the foot is maintained still, the note belt can be hit; the foot tracking device of the user needs to be maintained on the same side of the track, and if positions in succession are correct, it is continuously determined that the note is correct; it is determined, based on a beat, whether the foot position of the user is continuously maintained, and if not, it is determined that the hit fails. After the foot tracking device of the user is maintained in the same track, if the end note is reached, it is determined that this note determination is completed, otherwise, the hit fails.

Step 806, playing a sound effect corresponding to the target object and/or switching a display state of the target object.

Step 807, determining an action score for the target object on the basis of the first action time and the first action effective time, and displaying the action score.

Specifically, after the virtual object is controlled to act on the target object on the basis of the action signal, and after displaying that the target object is matched, feedback after the target object is matched may be displayed, for example, after the target object is triggered, a strong light "trigger effect" appears, and the target object is crushed, and after the action, an object track is highlighted, and after the action is successful, a hit evaluation result appears in the virtual reality scene. For example, for a long note, when stepping on an initial note, no evaluation appears first, and after stepping on an end note, an evaluation is given.

Therefore, after wearing a VR device and an action tracking device, a user can, in a VR game, perform an action, such as stepping, on a track area to hit an object in the game. For the action tracking device, a goal of human-computer interaction in the VR system is realized, and the VR device will real-time adjust the virtual reality scene based on the action signal, and use position and posture tracking, spatial positioning and the like, thereby realizing interaction between a human and the virtual reality scene.

The data processing solution provided in the embodiment of the present disclosure comprises, aligning a ground of a virtual reality scene with that of a reality scene, displaying an object in the virtual reality scene, receiving an action signal sent by an action tracking device, controlling display of a virtual object on the basis of the action signal, and displaying an associated object of the object on the ground of the virtual reality scene; wherein, the associated object is associated with an object position; the action signal comprising: a time stamp, an acceleration signal, an angular velocity signal, and a magnetometer signal, determining a first action time and a first action posture on the basis of the time stamp, the acceleration signal, the angular velocity signal, and the magnetometer signal; object information comprising a first action effective time and an object position, the first action time being matched with the first action effective time, and the first action posture being matched with the object position, determining that the object is a target object; the object information further comprising a second action effective time, determining a second action time and a second action posture on the basis of the received action signal, when the second action time is matched with the second action effective time and the second action posture is matched with the object position, playing a second processing effect corresponding to the target object and/or switching a display state of the target object; determining an action score for the target object on the basis of the first action time and the first action effective time and displaying the action score. With the above technical solution, hit and other operations can be performed on the object in the virtual scene by stepping with a leg and other actions, and related action result information is displayed in real time simultaneously, so that a user knows the action result in time and action pleasure of the user is increased, which can greatly improve experience of the user in gaming by using foot and other actions in the virtual reality scene.

Fig. 13 is a schematic structural diagram of a data processing apparatus according to an embodiment of the present disclosure; the apparatus may be implemented by software and/or hardware, and may be generally integrated in an electronic device. As shown in Fig. 13, the apparatus comprises:
a first determination module 1301, configured to determine a first action time and a first action posture on the basis of a received action signal;
a second determination module 1302, configured to determine a target object, wherein object information of the target object is matched with the first action time and the first action posture; and
a playing module 1303, configured to play a first processing effect corresponding to the target object.

In some embodiments, the data processing apparatus is applied to a head-mounted display device, and further comprises:
a first display module, configured to display, in a virtual reality scene, the target object, a ground of the virtual reality scene being aligned with that of a reality scene.

In some embodiments, the virtual reality scene comprises a virtual object, and the apparatus further comprises:
a control module, configured to control display of the virtual object on the basis of the action signal.

In some embodiments, the action signal comprises: a time stamp, an acceleration signal, and an angular velocity signal, and the first determination module 1301 is specifically configured to:
determine the first action time and the first action posture on the basis of the time stamp, the acceleration signal, and the angular velocity signal.

In some embodiments, the action signal further comprises: a magnetometer signal, and the first determination module 1301 is specifically further configured to:
determine the first action time and the first action posture on the basis of the time stamp, the acceleration signal, the angular velocity signal, and the magnetometer signal.

In some embodiments, the object information comprises a first action effective time and an object position, and the second determination module 1302 is specifically configured to:
the first action time being matched with the first action effective time, the first action posture being matched with the object position, determine that the object is the target object.

In some embodiments, the object information further comprises a second action effective time, and the apparatus further comprises:
a third determination module, configured to determine a second action time and a second action posture on the basis of the received action signal; and
the playing module 1303 is further configured to, when the second action time is matched with the second action effective time and the second action posture is matched with the object position, play a second processing effect corresponding to the target object.

In some embodiments, the apparatus further comprises:
a second display module, configured to display, on the ground of the virtual reality scene, an associated object of the object, wherein the associated object is associated with the object position.

In some embodiments, the apparatus further comprises:
a switching module, configured to switch a display state of the associated object at the position corresponding to the first action posture.

In some embodiments, the apparatus further comprises:
a third display module, configured to display the target object at the first action effective time at the object position.

In some embodiments, the playing module 1303 is specifically configured to:
play a sound effect corresponding to the target object and/or switch a display state of the target object.

In some embodiments, the apparatus further comprises:
a determination and display module, configured to determine and display an action score for the target object on the basis of the first action time and the first action effective time.

In some embodiments, the first action is a stepping action, and the first action posture is a posture of the stepping action.

In some embodiments, the action signal is a three degree-of-freedom signal.

The modules described above may be implemented as software components executed on one or more general-purpose processors, or implemented as hardware for executing certain functions, such as programmable logic devices and/or application specific integrated circuits. In some embodiments, these modules may be embodied in a form of a software product, which may be stored in a non-volatile storage media. These non-volatile storage media include causing a computer device (e.g., a personal computer, server, network device, mobile terminal, etc.) to perform the method described in the embodiment of the present disclosure. In some embodiments, the modules described above may also be implemented on a single device or distributed across a plurality of devices. The functions of these modules may be combined with each other, or further divided into a plurality of sub-modules.

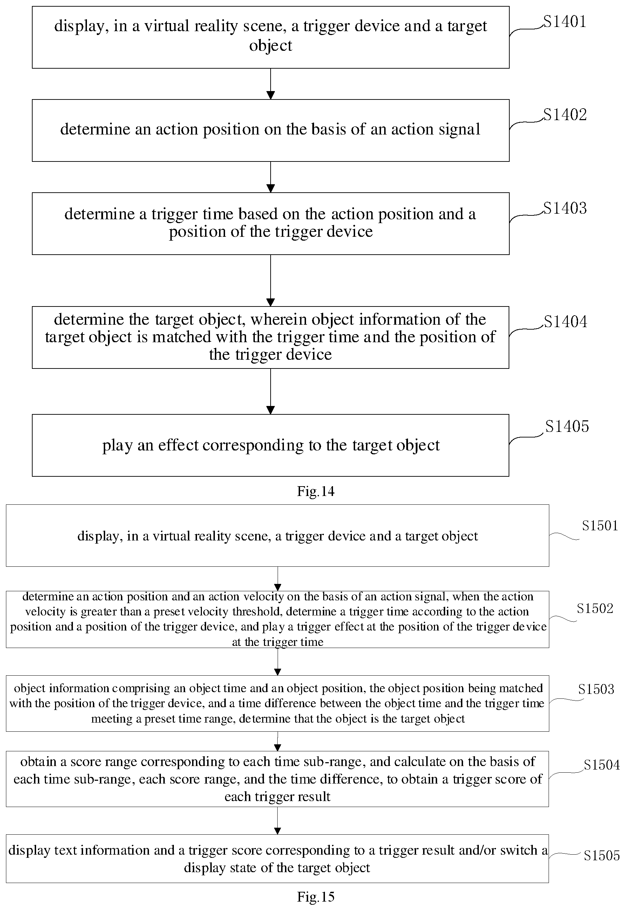

Fig. 14 is a schematic flow diagram of a data processing method according to an embodiment of the present disclosure, wherein the method may be executed by a data processing apparatus, the apparatus may be implemented by using software and/or hardware, and may be generally integrated in an electronic device.

Compared with the related art, the technical solution provided in the embodiment of the present disclosure has the following advantages: according to the data processing solution provided in the embodiment of the present disclosure, displaying, in a virtual reality scene, a trigger device and a target object, determining an action position on the basis of an action signal, determining a trigger time according to the action position and a position of the trigger device, determining the target object, wherein object information of the target object is matched with the trigger time and the position of the trigger device, and playing an effect corresponding to the target object. With the above technical solution, it is possible to obtain the accurate action signal on the basis of the displayed trigger device to accurately act on the trigger device to determine the target object, and play the effect corresponding to the target object, greatly improving use experience of the user in the virtual reality scene while improving data processing accuracy.

As shown in Fig. 14, the method comprises:
step 1401, displaying, in a virtual reality scene, a trigger device and a target object.

The virtual reality scene may be any virtual reality scene, for example, a scene such as a music game and a note action game, or an interface interaction scene. The trigger device refers to a device that can generate a trigger effect (sound wave, electromagnetic wave, spark, electric arc, etc.) after receiving a trigger operation; a shape of the trigger device may be selected and set according to an application scene, for example, an elliptical disc, or a circular disc, and the trigger device and the trigger effect may be selected and set according to an application scene, which is not limited in the embodiment of the present disclosure. The target object refers to an object in the virtual reality scene that can be triggered, for example, a note or a display interface; a shape of the target object may be selected and set according to an application scene, which is not specifically limited in the embodiment of the present disclosure.

The trigger device and the target object are displayed, so that a position relation between the trigger device and the target object, that is, a relative position between the trigger device and the target object, may be obtained in real time; it can be understood that the position of the target object in the virtual reality scene that corresponds to each time point is preset, for example, in a virtual music rhythm game scene, a position of a note (target object) that corresponds to each time point is preset according to a music rhythm; for another example, in a virtual reading interaction scene, a position of a page that corresponds to each time point is preset according to text information.

Specifically, the position of the trigger device in the virtual reality scene generally remains unchanged, and the target object has its position updated over time, so that by displaying the trigger device and the target object in real time, a user is enabled to visually see the relative position between the target object and the trigger device, and when the target object and the trigger device coincide, the trigger device is triggered by the action signal, so that by displaying the trigger device and the target object in real time, the user can be prompted to control the action position and the action time for the trigger device, further improving accuracy of the processing effect.

Step 1402, determining an action position on the basis of an action signal.

The action signal, for example, a six-degree-of-freedom signal (degrees of freedom of movement in directions of three rectangular coordinate axes x, y, and z and degrees of freedom of rotation around these three coordinate axes), may be an action signal sent by the user by controlling an external device, such as operating a handle, including a position and posture of the handle, or a position and posture of an external device (such as a handle), which are, through image identification, calculated by a data processing device (such as a head display device) according to its own position and posture as well as an acquired image of the external device, may be taken as the action signal. The action position may refer to the position of the external device, or may be a position of a control device in the virtual reality scene that is controlled by the external device.

It can be understood that the action signal may directly act on the trigger device, or the control device may be displayed in the virtual reality scene, the action signal acts on the control device, and therefore, acts on the trigger device through the control device.

In the embodiment of the present disclosure, there are many manners of determining the action position on the basis of the action signal; in some implementations, the position and posture of the external device are obtained on the basis of the action signal, and the action position is determined based on the position and posture of the external device; in other implementations, the position and posture of the control device in the virtual reality scene are obtained on the basis of the action signal, and the action position is determined based on the position and posture of the control device.

The above two manners are merely examples of determining the action position on the basis of the action signal, and the implementation of determining the action position on the basis of the action signal is not specifically limited in the embodiment of the present disclosure.

Step 1403, determining a trigger time based on the action position and a position of the trigger device.

The trigger time refers to a time when the trigger device is triggered, that is, a time point when the action position is in contact with the position of the trigger device is taken as the trigger time.

In the embodiment of the present disclosure, there are many manners of determining the trigger time based on the action position and the position of the trigger device; in some implementations, a time point when it is determined that the action position and the position of the trigger device coincide based on the action position and the position of the trigger device, is recorded as the trigger time; in other implementations, an action velocity is determined based on the action signal, and when the action velocity is greater than a preset velocity threshold, a time point when the action position and the position of the trigger device coincide, is recorded as the trigger time.

The above two manners are merely examples of determining the trigger time based on the action position and the position of the trigger device, and the implementation of determining the trigger time based on the action position and the position of the trigger device is not specifically limited in the embodiment of the present disclosure.

Step 1404, determining the target object, wherein object information of the target object is matched with the trigger time and the position of the trigger device.

When the object information of the object is matched with the trigger time and the position of the trigger device, the object is the target object; the target object may be in different shapes, for example, a note, a circle, and the like, which is specifically selected and set according to an application scene, and is not limited in the embodiment of the present disclosure. The object information includes an object time, object position, and the like, the corresponding object information being specifically set according to the object.

In the embodiment of the present disclosure, there are many manners of determining the target object. In some implementations, the object information comprises an object time and an object position, and the object position being matched with the position of the trigger device, that is, the object position corresponding to the same direction or position area as the position of the trigger device, and a time difference between the object time and the trigger time meeting a preset time range, it is determined that the object is the target object.

In other implementations, the object information comprises an object time and an object position, and a position distance difference between the object position and the position of the trigger device meeting a preset distance range, and a time difference between the object time and the trigger time meeting a preset time range, it is determined that the object is the target object.

The above two manners are merely examples of determining the target object, and the implementation of determining the target object is not specifically limited in the embodiment of the present disclosure.

Step 1405, playing an effect corresponding to the target object.

The effect can be selected and set according to an application scene, such as updating of a display state of the shape, color or the like of the target object.

In the embodiment of the present disclosure, there are many manners of playing the effect corresponding to the target object; in some implementations, while text information and a trigger score that correspond to a trigger result are displayed, a display state of the target object is switched; in other implementations, a trigger level corresponding to the trigger result is obtained, the trigger level is displayed, and the display state of the target object is switched.

The above two manners are merely examples of playing the effect corresponding to the target object, and the implementation of playing the effect corresponding to the target object is not specifically limited in the embodiment of the present disclosure.

The data processing solution provided in the embodiment of the present disclosure comprises, displaying a trigger device and a target object in a virtual reality scene, determining an action position on the basis of an action signal, determining a trigger time based on the action position and a position of the trigger device, determining the target object, wherein object information of the target object is matched with the trigger time and the position of the trigger device, and playing an effect corresponding to the target object. With the above technical solution, it is possible to obtain the accurate action signal on the basis of the displayed trigger device to accurately act on the trigger device to determine the target object and play the effect corresponding to the target object, greatly improving use experience of the user in the virtual reality scene while the data processing accuracy is improved.

In some implementations, the method further comprises: playing a trigger effect at the position of the trigger device at the trigger time.

The trigger effect refers to an effect displayed when acting on the trigger device, and the trigger effect may be one or more of a sound wave effect, an electromagnetic wave effect, a spark effect, and an electric arc effect.

In the embodiment of the present disclosure, the trigger device includes a plurality of trigger sections, and the playing the trigger effect at the position of the trigger device comprises: determining a target trigger section from the plurality of trigger sections based on the position of the trigger device, and triggering the effect at a position of the target trigger section.

In the embodiment of the present disclosure, the trigger device is divided into the plurality of trigger sections, it is only controlled that the effect is triggered at the position (such as a center position) of the target trigger section to which the position of the trigger device belongs; in addition, it is also possible to control the target trigger section to vibrate or the like to prompt the user, further improving interaction experience of the user.

It can be understood that, the object information comprises an object time and an object position, the object position being matched with the position of the trigger device, that is, the object position being matched with the position of the target trigger section, that is, the object position corresponding to the same direction or position area as the position of the target trigger section, and a time difference between the object time and the trigger time meeting a preset time range, it is determined that the object is the target object.

In the above solution, the trigger effect is played by the trigger device, improving interaction richness of the virtual reality scene, and it is also possible to divide the trigger device into the plurality of trigger sections, and control vibration and the trigger effect of the target trigger section to which the position of the trigger device belongs, further improving display and interaction interestingness of the virtual reality scene, meeting more use needs of the user, and improving use experience of the user.

In some implementations, the action velocity is determined based on the action signal, and when the action velocity is greater than a preset velocity threshold, the trigger time is determined based on the action position and the position of the trigger device.

In the embodiment of the present disclosure, the data processing device (such as a head display device) acquires an image of an external connected device (such as a handle), obtains the action velocity according to an image identification algorithm, and determines the trigger time based on the action position and the position of the trigger device when the action velocity is greater than the preset velocity threshold. The velocity threshold can be set according to an application scene.

It should be noted that, when the action velocity is less than or equal to the preset velocity threshold, the trigger time is not determined even if it is determined based on the action position and the position of the trigger device that the positions coincide.

In the above solution, the trigger time is determined based on the action position and the position of the trigger device only when the action velocity is greater than the velocity threshold, thereby avoiding a mis-trigger operation, further improving accuracy of data processing, and improving use experience of a user.

In some implementations, the object information comprises an object time and an object position, and the determining the target object comprises: the object position being matched with the position of the trigger device, and a time difference between the object time and the trigger time meeting a preset time range, determining that the object is the target object.

In the embodiment of the present disclosure, the trigger effect generated by the trigger device may act on the target object, thereby obtaining a trigger result, wherein the trigger result may be set according to an application scene, and may be trigger success and trigger failure, and may also be a perfect trigger, a good trigger, a right trigger and a failed trigger, and the like.

Specifically, a time when the trigger device is triggered may be obtained as the trigger time, and it can be understood that the target object has its position continuously updated over time, i.e., a position relation between the target object and the trigger device, and at the object time, the target object is displayed at the object position, for example, the target object coinciding with the trigger device may be understood as the target object coinciding with any trigger section in the trigger device.

Further, on the basis of the trigger time and the object time, a time difference is determined, i.e., a time difference between the trigger time and the object time, and it can be understood that the less the time difference is, the more accurate the trigger time is and therefore, the better the trigger effect is, so that a trigger result can be determined on the basis of the time difference and a preset time range.

In the embodiment of the present disclosure, there are many manners of determining the trigger result on the basis of the time difference and the preset time range; in some implementations, the time range comprises a first time sub-range, a second time sub-range, and a third time sub-range, wherein, the first time sub-range is lower than the second time sub-range, and the method further comprises: determining a first trigger result when the time difference is within the first time sub-range, determining a second trigger result when the time difference is within the second time sub-range, determining a third trigger result when the time difference is within the third time sub-range, and determining a fourth trigger result when the time difference exceeds the third time sub-range.

Specifically, the time range is divided into different time sub-ranges, and corresponding trigger results are determined based on the time sub-range the time difference is within. For example, a first time sub-range is 0 to 50ms, a second time sub-range is 50 to 120ms, and a third time sub-range is 120 to 200ms, for example, a time difference is 10ms, which is within the first time sub-range of 0 to 50ms, so that it is determined that a first trigger result is a perfect trigger, and for another example, a time difference is 210ms, which is outside the third time sub-range of 120 to 200ms, so that it is determined that a fourth trigger result is "miss".

In other implementations, a time sub-range to which the time difference belongs is determined, a score calculation formula corresponding to the time sub-range is obtained to calculate the time difference, and a trigger score is obtained as the trigger result.

In the embodiment of the present disclosure, a score range corresponding to each time sub-range is obtained, and calculation is performed on the basis of each time sub-range, each score range, and the time difference, to obtain a trigger score of each trigger result.

For example, a first time sub-range is 0 to 50ms, with a corresponding score range of 100 to 120, and if a time difference is 10ms, it is calculated first that a difference between 120 and 100 is 20, the time difference of 10ms is divided by 50ms and multiplied by the difference of 20 to obtain 4, and then 4 is subtracted from 120 to obtain a trigger score of 116.

With the above solution, the trigger result is determined based on the time difference between the trigger time and the object time, thereby improving accuracy of the trigger result, further, the trigger result is further subdivided on the basis of the time difference and the preset time range, and the trigger score of each trigger result can be calculated and provided to the user, further making the user know the specific trigger result, meeting use needs of the user, and improving use experience of the user.

In some embodiments, text information and the trigger score corresponding to the trigger result are displayed and/or a display state of the target object is switched.

For example, when a trigger result is success, text information and a trigger score corresponding to the trigger result are displayed, and a display state of the target object is switched simultaneously, for example, to a crushed state, and when a trigger result is failure, text information and a trigger score corresponding to the trigger result are displayed.

A different trigger result corresponds to different text information and a different trigger score, and the display state of the target object can be preset according to application needs, such as switching of a display shape and color.

In the embodiment of the present disclosure, when the trigger result is success, it is possible to display the text information and trigger score corresponding to the trigger result and/or switch the display of the target object, for example, to a crushed state, thereby further improving the display of the trigger effect in the virtual reality scene and action experience of the user.

Fig. 15 is a schematic flow diagram of another data processing method according to an embodiment of the present disclosure; this embodiment further optimizes the above data processing method on the basis of the above embodiment. As shown in Fig. 15, the method comprises:
step 1501, displaying, in a virtual reality scene, a trigger device and a target object.

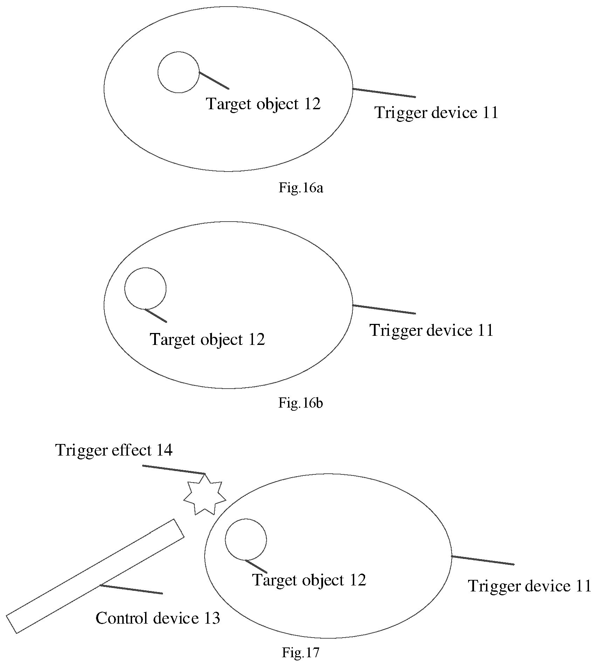

Exemplarily, Fig. 16a is a schematic diagram of displaying a trigger device and a target object according to an embodiment of the present disclosure, wherein a schematic diagram of a virtual reality scene is shown in the figure; the virtual reality scene includes a trigger device 11 and a target object 12, the trigger device 11 is set in a form of an ellipse, and a user can trigger the trigger device 11 by sending an action signal.

It can be understood that, the trigger device 11 and the target object 12 are updated in real time, for example, as shown in Fig. 16b, compared with Fig. 16a, it is displayed that a position relation between the trigger device 11 and the target object 12 has been updated and displayed in real time, so that the user can visually see the position relation between the two, and therefore control an external device to trigger the trigger device at the trigger device 11 and the target object 12, that is, by displaying the position relation between the trigger device 11 and the target object 12 in real time in the virtual reality scene, the user can be prompted of the action time and action position for the trigger device 11, thereby improving action experience of the user while ensuring an action effect.

Step 1502, determining an action position and an action velocity on the basis of an action signal, when the action velocity is greater than a preset velocity threshold, determining a trigger time based on the action position and a position of the trigger device, and playing a trigger effect at the position of the trigger device at the trigger time.

In the embodiment of the present disclosure, the trigger device comprises a plurality of trigger sections, and the playing the trigger effect at the position of the trigger device comprises: determining a target trigger section from the plurality of trigger sections based on the position of the trigger device, and triggering the effect at the position of the target trigger section.

It is possible to preset an object time and object position of every target object, for example, when target objects are notes, based on a music rhythm, each note is preset to appear at a specific object position at a specific object time, synchronized with the music rhythm, so as to control the note to be displayed at the corresponding object time and object position based on the preset object time and object position.

Further, on the basis of the position relation between the trigger device and the target object that is displayed in real time, for example, the user sends an action signal to the virtual reality device by controlling the external device, so that the virtual reality device controls a control device to trigger the trigger device based on the action signal, to obtain an action position, and a trigger effect is played (for example, emitted) at the position of the trigger device.

Exemplarily, Fig. 17 is a schematic diagram of acting on a target object according to an embodiment of the present disclosure, as shown in Fig. 17, a control device 13 acts on a trigger device 11, and the trigger device 11 triggers an effect 14 to process a target object 12.

In the embodiment of the present disclosure, it can also be set that the trigger device comprises a plurality of trigger sections, each trigger section corresponding to a different target object, a target trigger section to which a trigger position belongs is obtained, and it is controlled to trigger an effect at the position of the target trigger section.

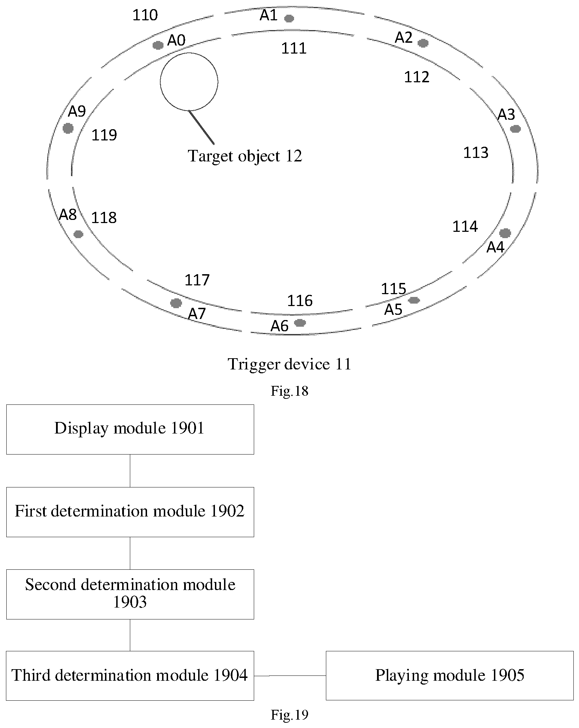

Exemplarily, Fig. 18 is a schematic diagram of a trigger device according to an embodiment of the present disclosure; as shown in Fig. 18, a trigger device 11 includes trigger sections 110-119, which include center positions A0-A9, respectively.

In addition, Fig. 18 also shows that the target object 12 is about to coincide with the trigger section 110, so that after an action signal is received, the trigger section 110 is triggered, and an effect can be triggered at the center position A0.

Step 1503, object information comprising an object time and an object position, the object position being matched with the position of the trigger device, and a time difference between the object time and the trigger time meeting a preset time range, determining that the object is the target object.

Step 1504, obtaining a score range corresponding to each time sub-range, and calculating on the basis of each time sub-range, each score range, and the time difference, to obtain a trigger score of each trigger result.

In the embodiment of the present disclosure, the time range comprises a first time sub-range, a second time sub-range, and a third time sub-range, wherein, the first time sub-range is lower than the second time sub-range, and the second time sub-range is lower than the third time sub-range, and determining the trigger result on the basis of the time difference and the preset time range comprises: determining a first trigger result when the time difference is within the first time sub-range, determining a second trigger result when the time difference is within the second time sub-range, determining a third trigger result when the time difference is within the third time sub-range, and determining a fourth trigger result when the time difference exceeds the third time sub-range. The trigger result and the trigger score can be set according to an application scene.

As an example, it is determined that a first time sub-range is 0 to 50ms, a second time sub-range is 50 to 120ms, and a third time sub-range is 120 to 200ms, for example, when a time difference is within the first time sub-range, it is determined that a first trigger result is a perfect trigger, a score range corresponding to the first time sub-range is 100 to 120, a score difference of 20 between the minimum score and the maximum score in the score range is obtained, the time difference is divided by the maximum time in the first time sub-range and multiplied by the score difference to obtain an initial value, and finally, the initial value is subtracted from the maximum score to obtain a trigger score; when a time difference is 10ms, a trigger score is calculated as 116.

For another example, when a time difference is within the second time sub-range, it is determined that a second trigger result is an excellent trigger, a score range corresponding to the second time sub-range is 80 to 100, a score difference of 20 between the minimum score and the maximum score in the score range is obtained, the maximum time in the first time sub-range is subtracted from the time difference to obtain a first difference, the maximum time in the first time sub-range is subtracted from the maximum time in the second time sub-range to obtain a second difference, a score difference of 20 between the minimum score and the maximum score in the score range is obtained, the first difference is divided by the second difference and multiplied by 20 to obtain an initial value, and finally, the initial value is subtracted from the maximum score to obtain a trigger score; when a time difference is 85ms, 50 is subtracted from 85 to obtain a first difference of 35, 50 is subtracted from 120 to obtain a second difference of 70, 35 is divided by 70 and multiplied by 20 to obtain an initial value of 10, 20 is subtracted from 100 to obtain a trigger score of 90.

For still another example, when a time difference is within the third time sub-range, it is determined that a third trigger result is a correct trigger, a score range corresponding to the third time sub-range is 40 to 80, a score difference of 40 between the minimum score and the maximum score in the score range is obtained, the maximum time in the second time sub-range is subtracted from the time difference to obtain a third difference, the maximum time in the second time sub-range is subtracted from the maximum time in the third time sub-range to obtain a fourth difference, the score difference of 40 between the minimum score and the maximum score in the score range is obtained, the third difference is divided by the fourth difference and multiplied by 40 to obtain an initial value, and finally, the initial value is subtracted from the maximum score to obtain a trigger score; when a time difference is 160ms, 120 is subtracted from 160 to obtain a third difference of 40, 120 is subtracted from 200 to obtain a fourth difference of 80, 40 is divided by 80 and multiplied by 40 to obtain an initial value of 20, 20 is subtracted from 80 to obtain a trigger score of 60.

In addition, when a time difference exceeds the third time sub-range, it is determined that a fourth trigger result is "miss", and a trigger score is 0.

Step 1505, displaying text information and a trigger score corresponding to the trigger result and/or switching a display state of the target object.

Specifically, in a virtual reality scene such as a virtual reality game, target objects are continuously generated and fly to a user from a distance; one trigger device is provided in the virtual reality game, when the target object coincides with a certain trigger section of the trigger device, the user sends an action signal through an external device to control a control device to act on the trigger device, the trigger device generates vibration, and triggers an effect (such as emits a shock wave, electric arc) to smash the target object, and a trigger result and a trigger score are displayed.

The data processing solution provided in the embodiment of the present disclosure comprises: displaying a trigger device and a target object in a virtual reality scene; determining an action position and an action velocity on the basis of an action signal, when the action velocity is greater than a preset velocity threshold, determining a trigger time based on the action position and a position of the trigger device, and playing a trigger effect at the position of the trigger device at the trigger time; object information comprising an object time and an object position, the object position being matched with the position of the trigger device, and a time difference between the object time and the trigger time meeting a preset time range, determining that the object is a target object; obtaining a score range corresponding to each time sub-range, and performing calculation on the basis of each time sub-range, each score range, and the time difference, to obtain a trigger score of each trigger result; and displaying text information and a trigger score corresponding to the trigger result and/or switching a display state of the target object. With the above technical solution, a trigger device is provided in the virtual reality scene, on the basis of control of the user, the trigger device triggers an effect to act on the target object, and the effect corresponding to the trigger result is played, so that use experience of the user in the virtual reality scene can be greatly improved.

Fig. 19 is a schematic structural diagram of a data processing apparatus according to an embodiment of the present disclosure, wherein the apparatus may be implemented by software and/or hardware, and may be generally integrated in an electronic device. As shown in Fig. 19, the apparatus comprises:
a display module 1901, configured to display a trigger device and a target object in a virtual reality scene;
a first determination module 1902, configured to determine an action position on the basis of an action signal;
a second determination module 1903, configured to determine a trigger time based on the action position and a position of the trigger device;
a third determination module 1904, configured to determine a target object, wherein object information of the target object is matched with the trigger time and the position of the trigger device; and
a playing module 1905, configured to play an effect corresponding to the target object.

In some embodiments, the apparatus further comprises:
a trigger module, configured to play a trigger effect at the position of the trigger device at the trigger time.

In some embodiments, the trigger device comprises a plurality of trigger sections, and the trigger module is specifically configured to:
determine a target trigger section from the plurality of trigger sections based on the position of the trigger device; and
trigger the effect at the position of the target trigger section.

In some embodiments, the apparatus further comprises:
a fourth determination module, configured to determine an action velocity based on the action signal; and
the second determination module 1903, further configured to, when the action velocity is greater than a preset velocity threshold, determine the trigger time according to the action position and the position of the trigger device.

In some embodiments, the object information comprises an object time and an object position, and the third determination module 1904 is specifically configured to:
the object position being matched with the position of the trigger device, and a time difference between the object time and the trigger time meeting a preset time range, determine that the object is the target object.

In some embodiments, the time range comprises a first time sub-range, a second time sub-range, and a third time sub-range, wherein, the first time sub-range is lower than the second time sub-range, and the apparatus further comprises: a fifth determination module, configured to:
determine a first trigger result when the time difference is within the first time sub-range;
determine a second trigger result when the time difference is within the second time sub-range;
determine a third trigger result when the time difference is within the third time sub-range; and
determine a fourth trigger result when the time difference exceeds the third time sub-range.

In some embodiments, the apparatus further comprises:
an obtaining module, configured to obtain a score range corresponding to each time sub-range; and
a calculation module, configured to calculate on the basis of each time sub-range, each score range, and the time difference, to obtain a trigger score of each trigger result.

In some embodiments, the playing module 1905 is specifically configured to:
display text information and a trigger score corresponding to a trigger result and/or switch a display state of the target object.

The modules described above may be implemented as software components executed on one or more general-purpose processors, or may be implemented as hardware for performing certain functions, such as programmable logic devices and/or application specific integrated circuits. In some embodiments, these modules may be embodied in a form of a software product, which may be stored in non-volatile storage media. These non-volatile storage media include causing a computer device (e.g., personal computer, server, network device, mobile terminal, etc.) to perform the method described in the embodiment of the present disclosure. In some embodiments, the modules described above may also be implemented on a single device or may be distributed across a plurality of devices. The functions of these modules may be combined with each other, or further divided into a plurality of sub-modules.

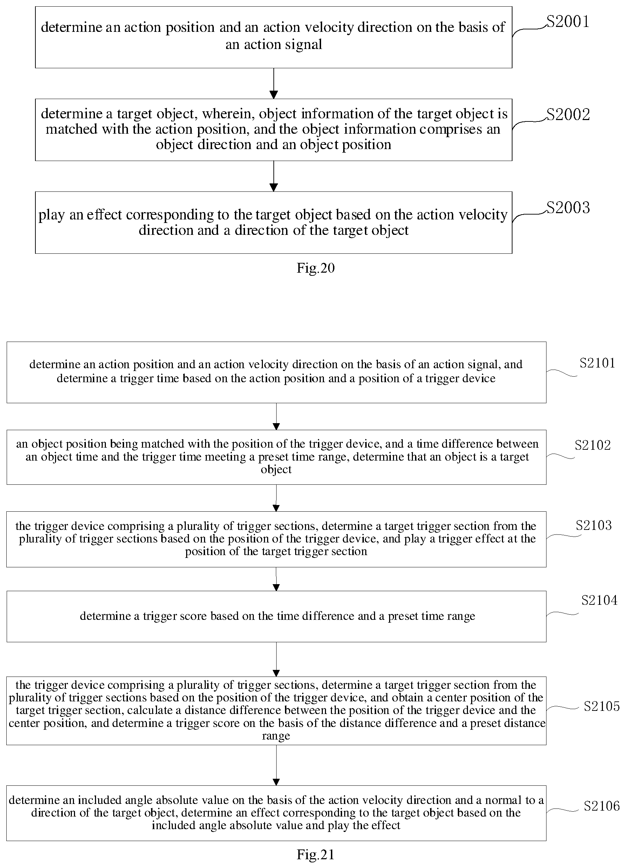

Fig. 20 is a schematic flow diagram of a data processing method according to an embodiment of the present disclosure, wherein the method may be executed by a data processing apparatus, and the apparatus may be implemented by using software and/or hardware, and may be generally integrated in an electronic device.

Compared with the related art, the technical solution provided in the embodiment of the present disclosure has the following advantages: according to the data processing solution provided in the embodiment of the present disclosure, determining an action position and an action velocity direction on the basis of an action signal, determining a target object, wherein, object information of the target object is matched with the action position, and the object information comprises an object direction and an object position, and playing an effect corresponding to the target object based on the action velocity direction and a direction of the target object. With the above technical solution, it is possible to accurately determine the target object based on the action position, and play the effect corresponding to the target object based on the action velocity direction and the direction of the target object, further improving data processing accuracy, and greatly improving interaction experience of a user.

As shown in Fig. 20, the method comprises:
step 2001, determining an action position and an action velocity direction on the basis of an action signal.

The action signal may be, for example, a six-degree-of-freedom signal (degrees of freedom of movement in directions of three rectangular coordinate axes x, y, and z and degrees of freedom of rotation around the three rectangular coordinate axes), and can be an action signal sent by a user by controlling an external device, such as operating a handle, including a position and posture of the handle, or a position and posture of an external device (such as a handle), which are, through image identification, calculated by a data processing device (such as a head display device) based on its own position and posture and an acquired image of the external device, may be taken as the action signal.

The action position may refer to a position of the external device, or a position of a control device in a virtual reality scene that is controlled by the external device; and the action velocity direction refers to an action vector, i.e. an action movement vector, such as a vector of pointing to a position of a handle after an action form a position of the handle before the action.

In the embodiment of the present disclosure, there are many manners of determining the action position on the basis of the action signal; in some implementations, the position and posture of the external device are obtained on the basis of the action signal, and the action position and the action velocity direction are determined based on the position and posture of the external device; in other implementations, the position and posture of the control device in the virtual reality scene are obtained on the basis of the action signal, and the action position and the action velocity direction are determined based on the position and posture of the control device.

The above two manners are merely examples of determining the action position and the action velocity direction on the basis of the action signal, and the implementation of determining the action position and the action velocity direction on the basis of the action signal is not specifically limited in the embodiment of the present disclosure.

Step 2002, determining a target object, wherein object information of the target object is matched with the action position, and the object information comprises an object direction and an object position.

The target object may be selected and set according to an application scene, for example, an object on which an action can act in a virtual reality scene, which may be a note or a display interface, and a shape of the target object may be selected and set according to the application scene, which is not limited in the embodiment of the present disclosure.

When object information of an object is matched with an action position, the object is the target object; the target object may be in different shapes, such as a note and a circle, which is specifically selected and set according to an application scene, and is not specifically limited in the embodiment of the present disclosure. The object information comprises an object time, object position, object direction, and the like, the corresponding object information being specifically set according to the object.

In the embodiment of the present disclosure, there are many manners of determining the target object; in some implementations, the object information comprising an object position, and the object position being matched with the action position, it is determined that the object is the target object; in other implementations, the object information comprising an object time and an object position, a trigger time is determined based on the action position and a position of a trigger device, and the object position being matched with the position of the trigger device, and a time difference between the object time and the trigger time meeting a preset time range, it is determined that the object is the target object.

The above two manners are merely examples of determining the target object, and the implementation of determining the target object is not specifically limited in the embodiment of the present disclosure.

Step 2003, playing an effect corresponding to the target object based on the action velocity direction and a direction of the target object.

The direction of the object is associated with the object position, meaning that the direction of the object varies depending on the object position, so that the direction of the target object can be determined based on the position of the target object. The effect corresponding to the target object may be selected and set according to an application scene, for example, updating of a display state of a shape, a color, and the like of the target object.

In the embodiment of the present disclosure, there are many manners of playing the effect corresponding to the target object based on the action velocity direction and the direction of the target object; in some implementations, an included angle absolute value is determined on the basis of the action velocity direction and a normal to the direction of the target object, and the effect corresponding to the target object is determined based on the included angle absolute value and played; in other implementations, when it is determined based on the action velocity direction and the direction of the target object that an included angle between two vectors is less than a preset included angle distance, text information and a trigger score corresponding to a trigger result are displayed and a display state of the target object is switched.

The above two manners are merely examples of playing the effect corresponding to the target object based on the action velocity direction and the direction of the target object, and the specific implementation of playing the effect corresponding to the target object based on the action velocity direction and the direction of the target object is not limited in the embodiment of the present disclosure.

The data processing solution provided in the embodiment of the present disclosure comprises: determining an action position and an action velocity direction on the basis of an action signal, determining a target object, wherein object information of the target object is matched with the action position, and the object information comprises an object direction and an object position, and playing an effect corresponding to the target object based on the action velocity direction and a direction of the target object. With the above technical solution, it is possible to accurately determine the target object based on the action position, and play the effect corresponding to the target object based on the action velocity direction and the direction of the target object, further improving data processing accuracy, and greatly improving interaction experience of a user.

In some implementations, the object information further comprises: an object time, and the method further comprises: determining a trigger time based on the action position and a position of a trigger device, and the determining the target object comprises: the object position being matched with the position of the trigger device, and a time difference between the object time and the trigger time meeting a preset time range, determining that the object is the target object.

The data processing method of the present disclosure can be applied to a virtual reality scene, wherein the virtual reality scene can be any virtual reality scene, for example, a music game, a note action game, and the like, and can also be an interface interaction scene.

In some implementations, the trigger device and the target object are displayed in real time in the virtual reality scene, so that a position relation between the trigger device and the target object, i.e., a relative position between the trigger device and the target object, may be obtained in real time; it can be understood that the position of the target object in the virtual reality scene that corresponds to each time point is preset, for example, in a virtual music rhythm game scene, a position of a note (target object) that corresponds to each time point is preset based on a music rhythm; for another example, in a virtual reading interaction scene, a position of a page that corresponds to each time point is preset based on text information.

Specifically, the position of the trigger device in the virtual reality scene generally remains unchanged, and the target object has its position updated over time, so that by displaying the trigger device and the target object in real time, a user is enabled to visually see the relative position between the target object and the trigger device, and when the target object and the trigger device coincide, the trigger device is triggered by an action signal, so that by displaying the trigger device and the target object in real time, the user can be prompted to control the action position and the action time for the trigger device, further improving accuracy of the processing effect.

It can be understood that the action signal may directly act on the trigger device, or the control device may be displayed in the virtual reality scene, the action signal acts on the control device, and therefore acts on the trigger device by the control device.

The trigger time refers to a time when the trigger device is triggered, that is, a time point when the action position is in contact with the position of the trigger device is taken as the trigger time.

In the embodiment of the present disclosure, there are many manners of determining the trigger time based on the action position and the position of the trigger device; in some implementations, a time point when it is determined based on the action position and the position of the trigger device that the action position and the position of the trigger device coincide, is recorded as the trigger time; in other implementations, an action velocity is determined based on the action signal, and when the action velocity is a preset velocity threshold, a time point when the action position and the position of the trigger device coincide is recorded as the trigger time.

The above two manners are merely examples of determining the trigger time based on the action position and the position of the trigger device, and the implementation of determining the trigger time based on the action position and the position of the trigger device is not specifically limited in the embodiment of the present disclosure.

In the embodiment of the present disclosure, there are many manners of determining the target object; in some implementations, the object information comprising an object time and an object position, the object position being matched with the position of the trigger device, that is, the object position corresponding to the same direction or position area as the position of the trigger device, and a time difference between the object time and the trigger time meeting a preset time range, it is determined that the object is the target object.

In other implementations, the object information comprising an object time and an object position, a position distance difference between the object position and the position of the trigger device meeting a preset distance range, and a time difference between the object time and the trigger time meeting a preset time range, it is determined that the object is the target object.

The above two manners are merely examples of determining the target object, and the implementation of determining the target object is not specifically limited in the embodiment of the present disclosure.

In the above solution, it is possible to obtain the accurate action signal on the basis of the displayed trigger device to accurately act on the trigger device to determine the target object, and play the effect corresponding to the target object, so that use experience of a user in the virtual reality scene is greatly improved while data processing accuracy is improved.

In some implementations, the trigger device comprises a plurality of trigger sections, and the method further comprises: determining a target trigger section from the plurality of trigger sections based on the position of the trigger device, and playing a trigger effect at a position of the target trigger section.

The trigger effect refers to an effect displayed when acting on the trigger device, and can be one or more of a sound wave effect, an electromagnetic wave effect, a spark effect and an electric arc effect.

In the embodiment of the present disclosure, the trigger device is divided into the plurality of trigger sections, and the effect is only controlled to be triggered at a position (such as a center position) of a target trigger section to which the position of the trigger device belongs; in addition, it is also possible to control the target trigger section to vibrate or the like to prompt a user, further improving interaction experience of the user.

It can be understood that the object information comprises an object time and an object position, the object position being matched with the position of the trigger device, that is, the object position being matched with the position of the target trigger section, i.e., the object position corresponding to the same direction or position area as the position of the target trigger section, and the time difference between the object time and the trigger time meeting a preset time range, it is determined that the object is the target object.

In the embodiment of the present disclosure, a trigger score is determined based on the time difference and a preset time range.

Specifically, a time when the trigger device is triggered may be obtained as the trigger time, it can be understood that the target object has its position continuously updated over time, that is, a position relation between the target object and the trigger device continuously updated over time, and at the object time, the target object is displayed at the object position, for example, the target object coinciding with the trigger device may be understood as the target object coinciding with any trigger section in the trigger device.

Further, a time difference, i.e., a time difference between the trigger time and the object time, is determined on the basis of the trigger time and the object time, and it can be understood that the less the time difference is, the more accurate the trigger time is, and therefore the better the trigger effect is, so that a trigger score can be determined on the basis of the time difference and the preset time range.

In the embodiment of the present disclosure, the time range comprises a plurality of time sub-ranges, a score range corresponding to each time sub-range is obtained, and calculation is performed on the basis of each time sub-range, each score range, and the time difference, to obtain a trigger score. The trigger score is determined by the time difference between the trigger time and the object time and is provided to the user, further making the user know the specific trigger result, meeting use needs of the user, and improving use experience of the user.

In the above solution, the trigger effect is played by the trigger device, improving interaction richness of the virtual reality scene, and the trigger device can be divided into the plurality of trigger sections, and vibration and the trigger effect of the target trigger section to which the position of the trigger device belongs is controlled, further improving display and interaction interestingness of the virtual reality scene, meeting more use needs of the user, and improving use experience of the user.

In some implementations, the trigger device comprises a plurality of trigger sections, and the method further comprises: determining a target trigger section from the plurality of trigger sections based on the position of the trigger device, and obtaining a center position of the target trigger section, calculating a distance difference between the position of the trigger device and the center position, and determining a trigger score on the basis of the distance difference and a preset distance range.

It can be understood that, when acting on the trigger device, the closer the center position of the target trigger section corresponding to the trigger device is to the position of the trigger device, the stronger the trigger effect is, and the higher the trigger score is after acting on the target object.

Specifically, the distance range is divided into different distance sub-ranges, a distance sub-range to which the distance difference belongs is determined, a score range corresponding to each distance sub-range is obtained, and calculation is performed on the basis of each distance sub-range, each score range, and the distance difference, to obtain the trigger score.

For example, a first distance sub-range is less than or equal to 0.5, a corresponding second score range is 20 to 40, a distance difference is 0.2; first, a value of 0.2 being divided by 0.5 and multiplied by 20 is calculated as 8, and 8 is subtracted from 40 to obtain a trigger score of 32.

With the above solution, the trigger score is determined based on the position of the trigger device and the center position of the target trigger section and is provided to the user, further making the user know the specific action result, meeting use needs of the user, and improving use experience of the user.

In some implementations, the playing the effect corresponding to the target object based on the action velocity direction and the direction of the target object comprises: determining an included angle absolute value on the basis of the action velocity direction and a normal to the direction of the target object, determining the effect corresponding to the target object based on the included angle absolute value and playing the effect.

In the embodiment of the present disclosure, the determining the effect corresponding to the target object based on the included angle absolute value and playing the effect comprises: when the included angle absolute value is less than a preset included angle threshold, displaying text information and the trigger score corresponding to a trigger result and/or switching a display state of the target object.

It should be noted that, when the included angle absolute value is greater than or equal to the included angle threshold, the effect corresponding to the target object is not played.

In the embodiment of the present disclosure, the action velocity direction may be a movement direction corresponding to a movement vector when the control device acts on the trigger device.

It can be understood that the less the included angle between the action velocity direction and the normal to the direction of the target object is, the stronger the trigger effect of the trigger device is, and the higher the trigger score is after acting on the target object.

Specifically, the included angle range is divided into different included angle sub-ranges, a time sub-range to which the included angle absolute value belongs is determined, a score range corresponding to each included angle sub-range is obtained, calculation is performed on the basis of each included angle sub-range, each score range, and the included angle absolute value, to obtain a second trigger score.

For example, a first included angle sub-range is less than or equal to 25, its corresponding first score range is 20 to 40, an included angle absolute value is 5; first, a value of 5 being divided by 25 and multiplied by 20 is calculated as 4, and 4 is subtracted from 40 to obtain a trigger score of 36.

Specifically, the included angle threshold may also be preset, and when the included angle absolute value is less than the preset included angle threshold, text information and the trigger score corresponding to a trigger result are displayed and/or a display state of the target object is switched, wherein a different trigger result correspond to different text information and a different trigger score, and the display state of the target object may be preset according to application needs, for example, switching of a display shape and color, and the like.

With the above solution, the effect corresponding to the target object is played based on the included angle absolute value determined on the basis of the action velocity direction and the normal to the direction of the target object, and the preset included angle threshold, further making the user visually know the specific action result through the effect, meeting use needs of the user, and improving use experience of the user.

Fig. 21 is a schematic flow diagram of another data processing method according to an embodiment of the present disclosure; this embodiment further optimizes the above data processing method on the basis of the above embodiment. As shown in Fig. 21, the method comprises:
step 2101, determining an action position and an action velocity direction on the basis of an action signal, and determining a trigger time based on the action position and a position of a trigger device;
step 2102, an object position being matched with the position of the trigger device, and a time difference between an object time and the trigger time meeting a preset time range, determining that an object is a target object.

At least one of step 2103, step 2104, or step 2105 may be performed after the step 2102, Fig. 21 being merely an example.

Step 2103, the trigger device comprising a plurality of trigger sections, determining a target trigger section from the plurality of trigger sections based on the position of the trigger device, and playing a trigger effect at the position of the target trigger section.

It can be preset that each target object is displayed at the object position at the object time, for example, when the target object is a note, a note time and note position of each note are preset based on a music rhythm, to control that the note is displayed at the note position at the corresponding note time.

Further, on the basis of a position relation between the trigger device and the target object displayed in real time, a user sends an action signal to a virtual reality device by controlling an external device, so that the virtual reality device controls, based on the action signal, a control device in a virtual reality scene to act on the trigger device, to obtain the action position and the action velocity direction, and controls the trigger device to trigger an effect.

Exemplarily, Fig. 17 is a schematic diagram of acting on a target object according to an embodiment of the present disclosure; as shown in Fig. 17, a control device 13 acts on a trigger device 11, and the trigger device 11 triggers an effect 14 to act on a target object 12.

In the embodiment of the present disclosure, it may be set the emitting device comprises a plurality of trigger sections, each trigger section corresponding to a different target object, each trigger section including a center position, a target trigger section to which the position of the trigger device belongs is obtained, and it is controlled that the effect is triggered at the position of the target trigger section. The trigger effect can be one or more of a sound wave effect, an electromagnetic wave effect, a spark effect, and an electric arc effect.

Exemplarily, Fig. 18 is a schematic diagram of a trigger device according to an embodiment of the present disclosure; as shown in Fig. 18, the trigger device 11 includes trigger sections 110-119, the trigger sections 110-119 including positions A0-A9, respectively.

In addition, Fig. 18 also shows that a target object 12 is about to coincide with the trigger section 110, so that after an action signal is received, an action is performed on the trigger section 110, and an effect can be triggered at the position A0.

A direction of the target object 12 is associated with an object position of the target object 12, for example, the target object appears on the trigger section 110, the direction of the target object 12 is associated with the trigger section 110, that is, the direction of the trigger section 110 is the direction of the target object 12; for another example, the target object appears on the trigger section 111, a direction of the target object 12 is associated with the trigger section 111, that is, the direction of the trigger section 111 is the direction of the target object 12, so that the user can, based on the position of the trigger section, determine that a direction in which interaction should be performed, and the direction of the interaction being consistent with the direction indicated by the object position of the object can give the user a more definite indication, meeting use needs of the user, and improving interaction experience of the user.

Step 2104, determining a trigger score based on a time difference and a preset time range.

Specifically, within a certain time period before and after the target object coincides with the trigger device, acting on the trigger device can trigger the effect to act on the target object, wherein the trigger score can be specifically set and determined according to an application scene.

Specifically, the time range comprises a first time sub-range, a second time sub-range, and a third time sub-range, wherein, the first time sub-range is lower than the second time sub-range; a time sub-range to which the time difference belongs is determined, and a score calculation formula corresponding to the time sub-range is obtained to calculate for the time difference to obtain the trigger score.

As an example, it is determined that a first time sub-range is 0 to 50ms, a second time sub-range is 50 to 120ms, and a third time sub-range is 120 to 200ms, for example, a score range corresponding to the first time sub-range is 100 to 120, a score difference of 20 between the minimum score and the maximum score in the score range is obtained, a time difference is divided by the maximum time in the first time sub-range and multiplied by the score difference to obtain an initial value, and finally, the initial value is subtracted from the maximum score to obtain a trigger score; when a time difference is 10ms, a trigger score is calculated as 116.

For another example, when a time difference is within a second time sub-range, a score range corresponding to the second time sub-range is 80 to 100, a score difference of 20 between the minimum score and the maximum score in the score range is obtained, the maximum time in the first time sub-range is subtracted from the time difference to obtain a first difference, the maximum time in the first time sub-range is subtracted from the maximum time in the second time sub-range to obtain a second difference, the score difference of 20 between the minimum score and the maximum score in the score range is obtained, the first difference is divided by the second difference and multiplied by 20 to obtain an initial value, and finally, the initial value is subtracted from the maximum score to obtain a trigger score; when a time difference is 85ms, 50 is subtracted from 85 to obtain a first difference of 35, 50 is subtracted from 120 to obtain a second difference of 70, 35 is divided by 70 and multiplied by 20 to obtain an initial value of 10, and 20 is subtracted from 100 to obtain a trigger score of 90.

For still another example, when a time difference is within a third time sub-range, a score range corresponding to the third time sub-range is 40 to 80, a score difference of 40 between the minimum score and the maximum score in the score range is obtained, the maximum time in the second time sub-range is subtracted from the time difference to obtain a third difference, the maximum time in the second time sub-range is subtracted from the maximum time in the third time sub-range to obtain a fourth difference, the score difference of 40 between the minimum score and the maximum score in the score range is obtained, the third difference is divided by the fourth difference and multiplied by 40 to obtain an initial value, and finally, the initial value is subtracted from the maximum score to obtain a trigger score; when a time difference is 160ms, 120 is subtracted from 160 to obtain a third difference of 40, 120 is subtracted from 200 to obtain a fourth difference of 80, 40 is divided by 80 and multiplied by 40 to obtain an initial value of 20, and 20 is subtracted from 80 to obtain a trigger score of 60.

In addition, when a time difference exceeds the third time sub-range, a trigger score is 0.

Step 2105, the trigger device comprising a plurality of trigger sections, determining a target trigger section from the plurality of trigger sections based on the position of the trigger device, and obtaining a center position of the target trigger section, calculating a distance difference between the position of the trigger device and the center position, and determining a trigger score on the basis of the distance difference and a preset distance range.

In the embodiment of the present disclosure, the trigger device comprising the plurality of trigger sections, the distance difference is determined on the basis of the position of the trigger device and the center position of the target trigger segment, and a score range is determined on the basis of the distance range, and a trigger score is determined on the basis of the distance difference, the distance range, and the score range.

As an example, a distance range includes a first distance sub-range less than or equal to 0.5, a second distance sub-range greater than 0.5 and less than or equal to 0.8, and a third distance sub-range greater than 0.8, for example, a score range corresponding to the first distance sub-range is 20 to 40, a score difference of 20 between the minimum score and the maximum score in the score range is obtained, the distance difference is divided by the maximum distance in the first distance sub-range and multiplied by the score difference to obtain an initial value, and finally, the initial value is subtracted from the maximum score to obtain a trigger score; when a distance difference is 0.2, a trigger score is calculated as 32.

For another example, a distance difference is within a second distance sub-range, a score range corresponding to the second distance sub-range is 10 to 20, a score difference of 10 between the minimum score and the maximum score in the score range is obtained, the maximum distance in the first distance sub-range is subtracted from the distance difference to obtain a first difference, the maximum distance in the first distance sub-range is subtracted from the maximum distance in the second distance sub-range to obtain a second difference, the score difference of 10 between the minimum score and the maximum score in the score range is obtained, the first difference is divided by the second difference and multiplied by 10 to obtain an initial value, and finally, the initial value is subtracted from the maximum score of 20 to obtain a trigger score.

For still another example, when a distance difference is within a third distance sub-range, a score range corresponding to the third distance sub-range is 5 to 10, a score difference of 5 between the minimum score and the maximum score in the score range is obtained, the maximum distance in the second distance sub-range is subtracted from the distance difference to obtain a third difference, the maximum distance in the second distance sub-range is subtracted from the maximum distance in the third distance sub-range to obtain a fourth difference, the score difference of 5 between the minimum score and the maximum score in the score range is obtained, the third difference is divided by the fourth difference and multiplied by 5 to obtain an initial value, and finally, the initial value is subtracted from the maximum score of 10 to obtain a trigger score.

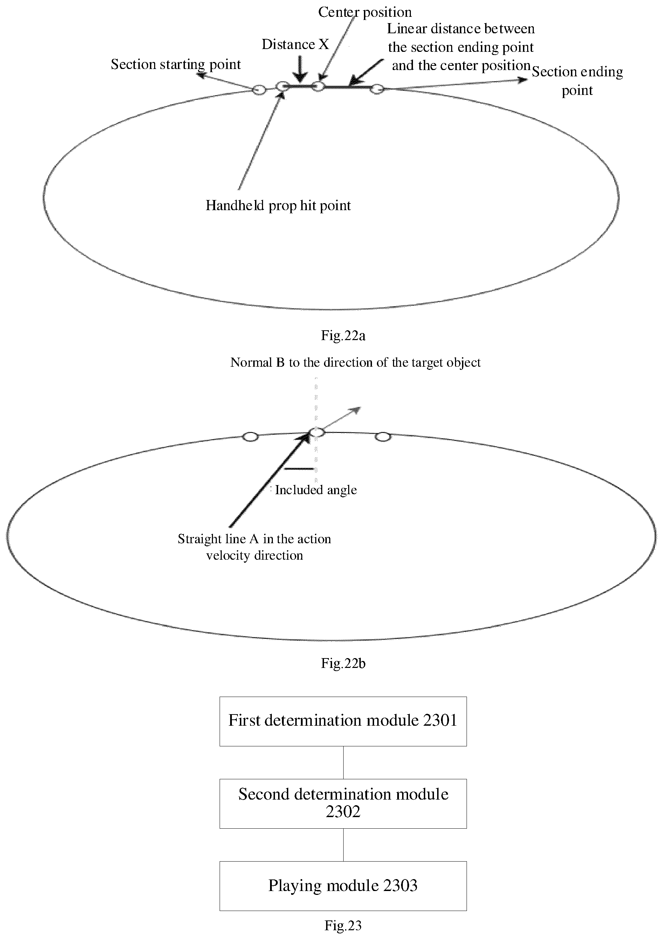

Exemplarily, Fig. 22a is a schematic diagram of a trigger scene according to an embodiment of the present disclosure; as shown in Fig. 22a, a starting point to an ending point of a section is taken as one trigger section, a hit point of a control device, such as a handheld prop, is within the trigger section, i.e., a target trigger section, a center position of the target trigger section is determined, and a distance between the hit point of the handheld prop and the center position is determined as a distance difference, such as a distance X shown in Fig. 22a.

Step 2106, determining an included angle absolute value on the basis of the action velocity direction and a normal to a direction of the target object, determining an effect corresponding to the target object based on the included angle absolute value and playing the effect.

In the embodiment of the present disclosure, when the included angle absolute value is less than a preset included angle threshold, text information and a trigger score corresponding to a trigger result are displayed and/or a display state of the target object is switched.

In the embodiment of the present disclosure, the trigger device comprises a plurality of trigger sections, the included angle absolute value is determined by the action velocity direction and the normal to the direction of the target object, and the effect corresponding to the target object is determined on the basis of the included angle absolute value and played.

As an example, it is determined that a first included angle sub-range is less than or equal to 25, a second included angle sub-range is greater than 25 and less than or equal to 45, a third included angle sub-range is greater than 45 and less than or equal to 60, for example, a score range corresponding to the first included angle sub-range is 20 to 40, a score difference of 20 between the minimum score and the maximum score in the score range is obtained, an included angle absolute value is divided by the maximum included angle in the first included angle sub-range and multiplied by the score difference to obtain an initial value, and finally, the initial value is subtracted from the maximum score to obtain a trigger score; when an included angle absolute value is 5, a trigger score is calculated as 36, and a corresponding effect is selected based on the trigger score and played.

For another example, an included angle absolute value is within a second included angle sub-range, a score range corresponding to the second included angle sub-range is 10 to 20, a score difference of 10 between the minimum score and the maximum score in the score range is obtained, the maximum included angle in the first included angle sub-range is subtracted from the included angle absolute value to obtain a first difference, the maximum included angle in the first included angle sub-range is subtracted from the maximum included angle in the second included angle sub-range to obtain a second difference, the score difference of 10 between the minimum score and the maximum score in the score range is obtained, the first difference is divided by the second difference and multiplied by 10 to obtain an initial value, and finally, the initial value is subtracted from the maximum score of 20 to obtain a trigger score, and a corresponding effect is selected based on the trigger score and played.

For still another example, when an included angle absolute value is within a third included angle sub-range, a score range corresponding to the third included angle sub-range is 5 to 10, a score difference of 5 between the minimum score and the maximum score in the score range is obtained, the maximum included angle in the second included angle sub-range is subtracted from the included angle absolute value to obtain a third difference, the maximum included angle in the second included angle sub-range is subtracted from the maximum included angle in the third included angle sub-range to obtain a fourth difference, the score difference of 5 between the minimum score and the maximum score in the score range is obtained, the third difference is divided by the fourth difference and multiplied by 5 to obtain an initial value, and finally, the initial value is subtracted from the maximum score of 10 to obtain a trigger score, and a corresponding effect is selected based on the trigger score and played.

In addition, when an included angle absolute value exceeds the third included angle sub-range, a trigger score is 0.

Exemplarily, Fig. 22b is a schematic diagram of another trigger scene according to an embodiment of the present disclosure; as shown in Fig. 22b, there is a straight line A in an action velocity direction, so that a direction of the straight line A is the action velocity direction, and a normal B is a normal to the direction of the target object, and an included angle between the straight line A and the normal B is taken as an included angle absolute value.

Specifically, in a virtual reality scene such as a virtual reality game, target objects are continuously generated and fly to a user from a distance, a trigger device is provided in the virtual reality game, when the target object coincides with a certain trigger section of the trigger device, the user sends an action signal through an external device to control a control device to hit the trigger device, the trigger device generates vibration, and triggers an effect (a shock wave, electric arc, and the like) to smash the target object, and a trigger result and a trigger score are displayed.

The data processing solution provided in the embodiment of the present disclosure comprises: determining an action position and an action velocity direction on the basis of an action signal, determining a trigger time based on the action position and a position of a trigger device, an object position being matched with the position of the trigger device, and a time difference between the object time and the trigger time meeting a preset time range, determining that an object is a target object, the trigger device comprising a plurality of trigger sections, determining a target trigger section from the plurality of trigger sections based on the position of the trigger device, playing a trigger effect at the position of the target trigger section, determining a trigger score based on the time difference and a preset time range; the trigger device comprising a plurality of trigger sections, determining a target trigger section from the plurality of trigger sections based on the position of the trigger device, and obtaining a center position of the target trigger section, calculating a distance difference between the position of the trigger device and the center position, and determining a trigger score on the basis of the distance difference and a preset distance range; determining an included angle absolute value on the basis of the action velocity direction and a normal to a direction of the target object, and determining an effect corresponding to the target object based on the included angle absolute value and playing the effect. With the above technical solution, the trigger device is provided in the virtual reality scene, the trigger device triggers, on the basis of control of a user, the effect to act on the target object, and an action result is determined based on the trigger time and the action position, improving accuracy of the action result, and the effect corresponding to the target object is played based on the action velocity direction and the direction of the target object, so that use experience of the user in the virtual reality scene can be greatly improved.

Fig. 23 is a schematic structural diagram of a data processing apparatus according to an embodiment of the present disclosure, wherein the apparatus may be implemented by software and/or hardware, and may be generally integrated in an electronic device. As shown in Fig. 23, the apparatus comprises:
a first determination module 2301, configured to determine an action position and an action velocity direction on the basis of an action signal;
a second determination module 2302, configured to determine a target object, wherein object information of the target object is matched with the action position, and the object information comprises an object direction and an object position; and
a playing module 2303, configured to play an effect corresponding to the target object based on the action velocity direction and a direction of the target object.

In some embodiments, the object direction is associated with the object position.

In some embodiments, the object information further comprises: an object time, and the method further comprises:
determining a trigger time according to the action position and a position of a trigger device; and
the second determination module 2302 is specifically configured to:
   the object position being matched with the position of the trigger device, and a time difference between the object time and the trigger time meeting a preset time range, determine that the object is the target object.

In some embodiments, the trigger device comprises a plurality of trigger sections, and the apparatus further comprises:
a third determination module, configured to determine a target trigger section from the plurality of trigger sections based on the position of the trigger device; and
a trigger module, configured to play a trigger effect at the position of the target trigger section.

In some embodiments, the trigger device comprises a plurality of trigger sections, and the apparatus further comprises:
a fourth determination module, configured to determine a target trigger section from the plurality of trigger sections based on the position of the trigger device, and obtain a center position of the target trigger section;
a calculation module, configured to calculate a distance difference between the position of the trigger device and the center position; and
a fifth determination module, configured to determine a trigger score on the basis of the distance difference and a preset distance range.

In some embodiments, the apparatus further comprises:
a sixth determination module, configured to determine a trigger score according to the time difference and a preset time range.

In some embodiments, the playing module 2303 comprises:
a determination unit, configured to determine an included angle absolute value on the basis of the action velocity direction and a normal to the direction of the target object; and
a playing unit, configured to determine the effect corresponding to the target object based on the included angle absolute value and play the effect.

In some embodiments, the playing unit is specifically configured to:
when the included angle absolute value is less than a preset included angle threshold, display text information and a trigger score corresponding to a trigger result and/or switch a display state of the target object.

The modules described above may be implemented as software components executed on one or more general-purpose processors, or may be implemented as hardware for performing certain functions, such as programmable logic devices and/or application specific integrated circuits. In some embodiments, these modules may be embodied in a form of a software product, which may be stored in non-volatile storage media. These non-volatile storage media include causing a computer device (e.g., personal computer, server, network device, mobile terminal, etc.) to perform the method described in the embodiment of the present disclosure. In some embodiments, the modules described above may also be implemented on a single device, or may be distributed across a plurality of devices. The functions of these modules may be combined with each other, or further divided into a plurality of sub-modules.

The data processing apparatus provided in the embodiment of the present disclosure can execute the data processing method provided in any embodiment of the present disclosure, and has functional modules and beneficial effects corresponding to the method.

An embodiment of the present disclosure further provides a computer program product, comprising a computer program/instructions which, when executed by a processor, implement the data processing method provided in any embodiment of the present disclosure.

Fig. 6 is a schematic structural diagram of an electronic device according to an embodiment of the present disclosure. Referring specifically to Fig. 6 below, it shows a schematic structural diagram of an electronic device 400 suitable for implementing the embodiment of the present disclosure. The electronic device 400 in the embodiment of the present disclosure may include, but is not limited to, a mobile terminal such as a mobile phone, laptop, digital broadcast receiver, PDA (Personal Digital Assistant), PAD (tablet), PMP (Portable Multimedia Player), and vehicle-mounted terminal (e.g., vehicle-mounted navigation terminal), and a fixed terminal such as a digital TV, and desktop computer. The electronic device shown in Fig. 6 is only an example, and should not bring any limitation to the functions and the scope of use of the embodiment of the present disclosure.

As shown in Fig. 6, the electronic device 400 may comprise a processing means (e.g., a central processing unit, graphics processing unit, etc.) 401, which may perform various appropriate actions and processes according to a program stored in a read-only memory (ROM) 402 or a program loaded from a storage means 408 into a random access memory (RAM) 403. In the RAM 403, various programs and data required for the operation of the electronic device 400 are also stored. The processing means 401, the ROM 402, and the RAM 403 are connected to each other through a bus 404. An input/output (I/O) interface 405 is also connected to the bus 404.

Generally, the following means may be connected to the I/O interface 405: an input means 406 including, for example, a touch screen, touch pad, keyboard, mouse, camera, microphone, accelerometer, gyroscope, etc.; an output means 407 including, for example, a liquid crystal display (LCD), speaker, vibrator, etc.; the storage means 408 including, for example, a magnetic tape, hard disk, etc.; and a communication means 409. The communication means 409 may allow the electronic device 400 to communicate with other devices, either wirelessly or by wire, to exchange data. While Fig. 6 illustrates the electronic device 400 having various means, it should be understood that not all illustrated means are required to be implemented or provided. More or fewer devices may be alternatively implemented or provided.

In particular, according to the embodiment of the present disclosure, the processes described above with reference to the flow diagrams may be implemented as a computer software program. For example, an embodiment of the present disclosure includes a computer program product comprising a computer program carried on a non-transitory computer-readable medium, the computer program containing program code for performing the method illustrated by the flow diagrams. In such an embodiment, the computer program may be downloaded and installed from a network via the communication means 409, or installed from the storage means 408, or installed from the ROM 402. The computer program, when executed by the processing means 401, performs the above functions defined in the data processing method of the embodiment of the present disclosure.

It should be noted that the above computer-readable medium of the present disclosure may be a computer-readable signal medium or a computer-readable storage medium or any combination of the above two. The computer-readable storage medium may be, for example, but is not limited to, an electronic, magnetic, optical, electromagnetic, infrared, or semiconductor system, apparatus, or device, or any combination of the foregoing. More specific examples of the computer-readable storage medium may include, but are not limited to: an electrical connection having one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In the present disclosure, the computer-readable storage medium may be any tangible medium containing or storing a program, wherein the program can be used by or in conjunction with an instruction execution system, apparatus, or device. However, in the present disclosure, the computer-readable signal medium may include a data signal propagated in baseband or as part of a carrier wave, in which computer-readable program code is carried. Such a propagated data signal may take a variety of forms, including, but not limited to, an electromagnetic signal, optical signal, or any suitable combination of the forgoing. The computer-readable signal medium may also be any computer-readable medium other than the computer-readable storage medium, wherein the computer-readable signal medium can send, propagate, or transmit a program for use by or in conjunction with an instruction execution system, apparatus, or device. The program code contained on the computer-readable medium may be transmitted using any appropriate medium, including but not limited to: a wire, an optical cable, RF (Radio Frequency), etc., or any suitable combination of the foregoing.

In some implementations, a client and a server may communicate using any currently known or future developed network protocol, such as HTTP (Hyper Text Transfer Protocol), and may be interconnected with any form or medium of digital data communication (e.g., a communication network). Examples of the communication network include a local area network ("LAN"), a wide area network ("WAN"), an internet (e.g., the Internet), and a peer-to-peer network (e.g., an ad hoc peer-to-peer network), as well as any currently known or future developed network.

The above computer-readable medium may be contained in the above electronic device; or may exist separately without being assembled into the electronic device.

The above computer-readable medium has one or more programs carried thereon, which, when executed by the electronic device, cause the electronic device to: determine an action position on the basis of a first action signal, determine a second action posture on the basis of a second action signal, and execute an operation instruction according to the action position and the second action posture.

The above computer-readable medium has one or more programs carried thereon, which, when executed by the electronic device, cause the electronic device to: determine a first action time and a first action posture on the basis of a received action signal, and determine a target object, wherein object information of the target object is matched with the first action time and the first action posture, and play a first processing effect corresponding to the target object.

The above computer-readable medium has one or more programs carried thereon, which, when executed by the electronic device, cause the electronic device to: display, in a virtual reality scene, a trigger device and a target object, determine an action position on the basis of an action signal, determine a trigger time according to the action position and a position of the trigger device, determine the target object, wherein object information of the target object is matched with the trigger time and the position of the trigger device, and play an effect corresponding to the target object.

The above computer-readable medium has one or more programs carried thereon, which, when executed by the electronic device, cause the electronic device to: determine an action position and an action velocity direction on the basis of an action signal, determine a target object, wherein object information of the target object is matched with the action position, and the object information comprises an object direction and an object position, and play an effect corresponding to the target object based on the action velocity direction and the direction of the target object.

Computer program code for performing the operation of the present disclosure may be written in one or more programming languages or a combination thereof, wherein the above programming language includes but is not limited to an object-oriented programming language such as Java, Smalltalk, and C++, and also includes a conventional procedural programming language, such as a "C" language or a similar programming language. The program code may be executed entirely on a user's computer, partly on a user's computer, as a stand-alone software package, partly on a user's computer and partly on a remote computer, or entirely on a remote computer or server. In a scene where a remote computer is involved, the remote computer may be connected to a user's computer through any type of network, including a local area network (LAN) or a wide area network (WAN), or may be connected to an external computer (for example, through the Internet using an Internet service provider).

The flow diagrams and block diagrams in the drawings illustrate the possibly implemented architecture, functions, and operations of the system, method and computer program product according to various embodiments of the present disclosure. In this regard, each block in the flow diagrams or block diagrams may represent a module, program segment, or part of code, which includes one or more executable instructions for implementing a specified logical function. It should also be noted that, in some alternative implementations, functions noted in blocks may occur in a different order from those noted in the drawings. For example, two blocks shown in succession may, in fact, be executed substantially concurrently, or they may sometimes be executed in a reverse order, which depends upon the functions involved. It will also be noted that each block in the block diagrams and/or flow diagrams, and a combination of the blocks in the block diagrams and/or flow diagrams, can be implemented by a special-purpose hardware-based system that performs specified functions or operations, or by a combination of special-purpose hardware and computer instructions.

The involved units described in the embodiments of the present disclosure may be implemented by software or hardware. The name of the unit does not, in some cases, constitute a limitation on the unit itself.

The functions described above herein may be executed, at least partially, by one or more hardware logic components. For example, without limitation, a hardware logic component of an exemplary type that may be used includes: a field programmable gate array (FPGA), an application specific integrated circuit (ASIC), an application specific standard parts (ASSP), a system on chip (SOC), a complex programmable logic device (CPLD), and the like.

In the context of this disclosure, a machine-readable medium may be a tangible medium, which can contain or store a program for use by or in conjunction with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of the machine-readable storage medium include an electrical connection based on one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

According to one or more embodiments of the present disclosure, the present disclosure provides a data processing method, comprising:
determining an action position on the basis of a first action signal;
determining a second action posture on the basis of a second action signal; and
executing an operation instruction based on the action position and the second action posture.

According to one or more embodiments of the present disclosure, in the data processing method provided in the present disclosure, the first action signal is a six-degree-of-freedom action signal; and/or
the second action signal is a three-degree-of-freedom action signal.

According to one or more embodiments of the present disclosure, in the data processing method provided in the present disclosure, the method further comprises:
determining a first action posture on the basis of the first action signal; and
the executing the operation instruction based on the action position and the second action posture, comprises:
   executing the operation instruction based on the action position, the first action posture, and the second action posture.

According to one or more embodiments of the present disclosure, in the data processing method provided in the present disclosure, the method further comprises:
determining the first action signal based on action data of a first device; and
determining the second action signal based on action data of a second device.

According to one or more embodiments of the present disclosure, in the data processing method provided in the present disclosure, the executing the operation instruction based on the action position and the second action posture, comprises:
executing a first operation instruction based on the action position; and
executing a second operation instruction based on the second action posture.

According to one or more embodiments of the present disclosure, in the data processing method provided in the present disclosure,
the first operation instruction corresponds to first display content of a display device, the first display content being determined based on a position and posture of the display device; and
the second operation instruction corresponds to second display content of the display device, the second display content being determined based on the posture of the display device, or the second display content being display content at a preset position.

According to one or more embodiments of the present disclosure, in the data processing method provided in the present disclosure, the executing the first operation instruction based on the action position, comprises:
the action position being matched with a first operation position of a first target object, playing an effect corresponding to the first target object;
the method further comprises:
   determining a second action time on the basis of the second action signal; and
   the executing the second operation instruction based on the second action posture, comprises:
      the second action time being matched with an operation effective time of a second target object, and the action posture being matched with a second operation position of the second target object, playing an effect corresponding to the second target object.

According to one or more embodiments of the present disclosure, in the data processing method provided in the present disclosure, the executing the first operation instruction based on the action position, comprises:
the action position being matched with an operation trajectory within an operation effective time, playing a first operation effect; and
the executing the second operation instruction based on the second action posture, comprises:
   the second action posture meeting a preset condition within the operation effective time, playing a second operation effect.

According to one or more embodiments of the present disclosure, in the data processing method provided in the present disclosure, the method further comprises:
displaying an operation prompt identification within the operation effective time.

According to one or more embodiments of the present disclosure, in the data processing method provided in the present disclosure, the method further comprises:
displaying a position identification associated with the action position.

According to one or more embodiments of the present disclosure, in the data processing method provided in the present disclosure, the executing the operation instruction based on the second action posture and the action position, comprises:
executing an operation instruction corresponding to the action position and the second action posture.

According to one or more embodiments of the present disclosure, in the data processing method provided in the present disclosure, the executing the operation instruction corresponding to the action position and the second action posture, comprises:
when the second action posture meets a preset condition, executing an operation instruction corresponding to the action position; or
the method further comprises:
   determining a first action posture on the basis of the first action signal; and
   the executing the operation instruction corresponding to the action position and the second action posture, comprises:
      when the second action posture meets a preset condition, executing an operation instruction corresponding to the first action posture and the action position.

According to one or more embodiments of the present disclosure, in the data processing method provided in the present disclosure, the executing the operation instruction corresponding to the action position and the second action posture, comprises:
executing an operation instruction corresponding to the action position, and displaying a real-time execution result;
   and
when the second action posture meets a preset condition, obtaining an execution result at a current time.

According to one or more embodiments of the present disclosure, the present disclosure provides a data processing apparatus, comprising:
a first determination module, configured to determine an action position on the basis of a first action signal;
a second determination module, configured to determine a second action posture on the basis of a second action signal; and
a processing module, configured to execute an operation instruction based on the action position and the second action posture.

According to one or more embodiments of the present disclosure, in the data processing apparatus provided in the present disclosure, the first action signal is a six-degree-of-freedom action signal; and/or the second action signal is a three-degree-of-freedom action signal.

According to one or more embodiments of the present disclosure, in the data processing apparatus provided in the present disclosure, the apparatus further comprises:
a third determination module, configured to determine a first action posture on the basis of the first action signal;
   and
the processing module is specifically configured to:
   execute the operation instruction based on the action position, the first action posture, and the second action posture.

According to one or more embodiments of the present disclosure, in the data processing apparatus provided in the present disclosure, the apparatus further comprises:
a fourth determination module, configured to determine the first action signal based on action data of a first device; and
a fifth determination module, configured to determine the second action signal based on action data of a second device.

According to one or more embodiments of the present disclosure, in the data processing apparatus provided in the present disclosure, the processing module comprises:
a first execution unit, configured to execute a first operation instruction based on the action position; and
a second execution unit, configured to execute a second operation instruction based on the second action posture.

According to one or more embodiments of the present disclosure, in the data processing apparatus provided in the present disclosure,
the first operation instruction corresponds to first display content of a display device, the first display content being determined based on a position and posture of the display device; and
the second operation instruction corresponds to second display content of the display device, the second display content being determined based on the posture of the display device, or the second display content being display content at a preset position.

According to one or more embodiments of the present disclosure, in the data processing apparatus provided in the present disclosure, the first execution unit is specifically configured to:
the action position being matched with a first operation position of a first target object, play an effect corresponding to the first target object;
the apparatus further comprises:
   a sixth determination module, configured to determine a second action time on the basis of the second action signal; and
   the second execution unit is specifically configured to:
      the second action time being matched with an operation effective time of a second target object, and the action posture being matched with a second operation position of the second target object, play an effect corresponding to the second target object.

According to one or more embodiments of the present disclosure, in the data processing apparatus provided in the present disclosure, the first execution unit is specifically configured to: the action position being matched with an operation trajectory within an operation effective time, play a first operation effect; and
the second execution unit is specifically configured to: the second action posture meeting a preset condition within the operation effective time, play a second operation effect.

According to one or more embodiments of the present disclosure, in the data processing apparatus provided in the present disclosure, the apparatus further comprises:
a first display module, configured to display an operation prompt identification within the operation effective time.

According to one or more embodiments of the present disclosure, in the data processing apparatus provided in the present disclosure, the apparatus further comprises:
a second display module, configured to display a position identification associated with the action position.

According to one or more embodiments of the present disclosure, in the data processing apparatus provided in the present disclosure, the processing module further comprises:
a third execution unit, configured to execute the operation instruction corresponding to the action position and the second action posture.

According to one or more embodiments of the present disclosure, in the data processing apparatus provided in the present disclosure, the third execution unit is specifically configured to:
when the second action posture meets a preset condition, execute the operation instruction corresponding to the action position; or
the apparatus further comprises:
   a seventh determination module, configured to determine a first action posture on the basis of the first action signal; and
   the third execution unit is specifically further configured to:
      when the second action posture meets a preset condition, execute an operation instruction corresponding to the first action posture and the action position.

According to one or more embodiments of the present disclosure, in the data processing apparatus provided in the present disclosure, the third execution unit is specifically further configured to:
execute an operation instruction corresponding to the action position, and display a real-time execution result; and
when the second action posture meets a preset condition, obtain an execution result at a current time.

According to one or more embodiments of the present disclosure, the present disclosure provides another data processing method, comprising:
determining a first action time and a first action posture on the basis of a received action signal;
determining a target object, wherein object information of the target object is matched with the first action time and the first action posture; and
playing a first processing effect corresponding to the target object.

According to one or more embodiments of the present disclosure, in the data processing method provided in the present disclosure, the data processing method is applied to a head-mounted display device, and further comprises:
displaying, in a virtual reality scene, the target object, a ground of the virtual reality scene being aligned with that of a reality scene.

According to one or more embodiments of the present disclosure, in the data processing method provided in the present disclosure, the virtual reality scene comprises a virtual object, and the method further comprises:
controlling display of the virtual object on the basis of the action signal.

According to one or more embodiments of the present disclosure, in the data processing method provided in the present disclosure, the action signal comprises: a time stamp, an acceleration signal, and an angular velocity signal, and the determining the first action time and the first action posture on the basis of the received action signal, comprises:
determining the first action time and the first action posture on the basis of the time stamp, the acceleration signal, and the angular velocity signal.

According to one or more embodiments of the present disclosure, in the data processing method provided in the present disclosure, the action signal further comprises: a magnetometer signal, and the method further comprises:
determining the first action time and the first action posture on the basis of the time stamp, the acceleration signal, the angular velocity signal, and the magnetometer signal.

According to one or more embodiments of the present disclosure, in the data processing method provided in the present disclosure, the method further comprises:
receiving the action signal sent by an action tracking device.

According to one or more embodiments of the present disclosure, in the data processing method provided by the present disclosure, the object information comprises a first action effective time and an object position, and the determining the target object comprises:
the first action time being matched with the first action effective time, and the first action posture being matched with the object position, determining that the object is the target object.

According to one or more embodiments of the present disclosure, in the data processing method provided in the present disclosure, the object information further comprises a second action effective time, and the method further comprises:
determining a second action time and a second action posture on the basis of the received action signal; and
when the second action time is matched with the second action effective time and the second action posture is matched with the object position, playing a second processing effect corresponding to the target object.

According to one or more embodiments of the present disclosure, in the data processing method provided in the present disclosure, the method further comprises:
displaying, on the ground of the virtual reality scene, an associated object of the object, wherein, the associated object is associated with the object position.

According to one or more embodiments of the present disclosure, in the data processing method provided in the present disclosure, the method further comprises:
switching a display state of the associated object at the position corresponding to the first action posture.

According to one or more embodiments of the present disclosure, in the data processing method provided in the present disclosure, the method further comprises:
displaying the target object at the first action effective time at the object position.

According to one or more embodiments of the present disclosure, in the data processing method provided in the present disclosure, the playing the first processing effect corresponding to the target object, comprises:
playing a sound effect corresponding to the target object and/or switching a display state of the target object.

According to one or more embodiments of the present disclosure, in the data processing method provided in the present disclosure, the method further comprises:
determining an action score for the target object on the basis of the first action time and the first action effective time, and displaying the action score.

According to one or more embodiments of the present disclosure, in the data processing method provided in the present disclosure, the first action is a stepping action, and the first action posture is a posture of the stepping action.

According to one or more embodiments of the present disclosure, in the data processing method provided in the present disclosure, the action signal is a three-degree-of-freedom signal.

According to one or more embodiments of the present disclosure, the present disclosure provides another data processing apparatus, comprising:
a first determination module, configured to determine a first action time and a first action posture on the basis of a received action signal;
a second determination module, configured to determine a target object, wherein object information of the target object is matched with the first action time and the first action posture, and
a playing module, configured to play a first processing effect corresponding to the target object.

According to one or more embodiments of the present disclosure, in the data processing apparatus provided in the present disclosure, the apparatus further comprises:
a first display module, configured to display, in a virtual reality scene, the target object, a ground of the virtual reality scene being aligned with that of a reality scene.

According to one or more embodiments of the present disclosure, in the data processing apparatus provided in the present disclosure, the apparatus further comprises:
a control module, configured to control display of the virtual object on the basis of the action signal.

According to one or more embodiments of the present disclosure, in the data processing apparatus provided in the present disclosure, the action signal comprises: a time stamp, an acceleration signal, and an angular velocity signal, and the first determination module is specifically configured to:
determine the first action time and the first action posture on the basis of the time stamp, the acceleration signal, and the angular velocity signal.

According to one or more embodiments of the present disclosure, in the data processing apparatus provided in the present disclosure, the action signal further comprises: a magnetometer signal, and the first determination module is specifically further configured to:
determine the first action time and the first action posture on the basis of the time stamp, the acceleration signal, the angular velocity signal, and the magnetometer signal.

According to one or more embodiments of the present disclosure, in the data processing apparatus provided in the present disclosure, the object information comprises a first action effective time and an object position, and the second determination module is specifically configured to:
the first action time being matched with the first action effective time, and the first action posture being matched with the object position, determine that the object is the target object.

According to one or more embodiments of the present disclosure, in the data processing apparatus provided in the present disclosure, the object information further comprises a second action effective time, and the apparatus further comprises:
a third determination module, configured to determine a second action time and a second action posture on the basis of the received action signal; and
the playing module is further configured to, when the second action time is matched with the second action effective time and the second action posture is matched with the object position, play a second processing effect corresponding to the target object.

According to one or more embodiments of the present disclosure, in the data processing apparatus provided in the present disclosure, the apparatus further comprises:
a switching module, configured to switch a display state of an associated object at a position corresponding to the first action posture.

According to one or more embodiments of the present disclosure, in the data processing apparatus provided in the present disclosure, the apparatus further comprises:
a third display module, configured to display the target object at the first action effective time at the object position.

According to one or more embodiments of the present disclosure, in the data processing apparatus provided in the present disclosure, the playing module is specifically configured to:
play a sound effect corresponding to the target object and/or switch a display state of the target object.

According to one or more embodiments of the present disclosure, in the data processing apparatus provided in the present disclosure, the apparatus further comprises:
a determination and display module, configured to determine an action score for the target object on the basis of the first action time and the first action effective time, and display the action score.

According to one or more embodiments of the present disclosure, in the data processing apparatus provided in the present disclosure, the first action is a stepping action, and the first action posture is a posture of the stepping action.

According to one or more embodiments of the present disclosure, in the data processing apparatus provided in the present disclosure, the action signal is a three-degree-of-freedom signal.

According to one or more embodiments of the present disclosure, the present disclosure provides another data processing method, comprising:
displaying, in a virtual reality scene, a trigger device and a target object;
determining an action position on the basis of an action signal;
determining a trigger time based on the action position and a position of the trigger device;
determining the target object, wherein object information of the target object is matched with the trigger time and the position of the trigger device; and
playing an effect corresponding to the target object.

According to one or more embodiments of the present disclosure, in the data processing method provided in the present disclosure, the method further comprises:
playing a trigger effect at the position of the trigger device at the trigger time.

According to one or more embodiments of the present disclosure, in the data processing method provided by the present disclosure, the trigger device comprises a plurality of trigger sections, and the playing the trigger effect at the position of the trigger device, comprises:
determining a target trigger section from the plurality of trigger sections based on the position of the trigger device; and
triggering the effect at a position of the target trigger section.

According to one or more embodiments of the present disclosure, in the data processing method provided in the present disclosure, the method further comprises:
determining an action velocity based on the action signal; and
when the action velocity is greater than a preset velocity threshold, determining the trigger time based on the action position and the position of the trigger device.

According to one or more embodiments of the present disclosure, in the data processing method provided in the present disclosure, the object information comprises an object time and an object position, and the determining the target object comprises:
the object position being matched with the position of the trigger device, and a time difference between the object time and the trigger time meeting a preset time range, determining that the object is the target object.

According to one or more embodiments of the present disclosure, in the data processing method provided in the present disclosure, the time range comprises a first time sub-range, a second time sub-range, and a third time sub-range, wherein, the first time sub-range is lower than the second time sub-range, and the method further comprises:
determining a first trigger result when the time difference is within the first time sub-range;
determining a second trigger result when the time difference is within the second time sub-range;
determining a third trigger result when the time difference is within the third time sub-range; and
determining a fourth trigger result when the time difference exceeds the third time sub-range.

According to one or more embodiments of the present disclosure, in the data processing method provided in the present disclosure, the method further comprises:
obtaining a score range corresponding to each time sub-range; and
calculating on the basis of each time sub-range, each score range, and the time difference, to obtain a trigger score of each trigger result.

According to one or more embodiments of the present disclosure, in the data processing method provided in the present disclosure, the playing the effect corresponding to the target object, comprises:
displaying text information and a trigger score corresponding to a trigger result and/or switching a display state of the target object.

According to one or more embodiments of the present disclosure, the present disclosure provides another data processing apparatus, comprising:
a display module, configured to display, in a virtual reality scene, a trigger device and a target object;
a first determination module, configured to determine an action position on the basis of an action signal;
a second determination module, configured to determine a trigger time based on the action position and a position of the trigger device;
a third determination module, configured to determine a target object, wherein, object information of the target object is matched with the trigger time and the position of the trigger device; and
a playing module, configured to play an effect corresponding to the target object.

According to one or more embodiments of the present disclosure, in the data processing apparatus provided in the present disclosure, the apparatus further comprises:
a trigger module, configured to play a trigger effect at the position of the trigger device at the trigger time.

According to one or more embodiments of the present disclosure, in the data processing apparatus provided in the present disclosure, the trigger device comprises a plurality of trigger sections, and the trigger module is specifically configured to:
determine a target trigger section from the plurality of trigger sections based on the position of the trigger device; and
trigger the effect at a position of the target trigger section.

According to one or more embodiments of the present disclosure, in the data processing apparatus provided in the present disclosure, the apparatus further comprises:
a fourth determination module, configured to determine an action velocity based on the action signal; and
the second determination module is further configured to, when the action velocity is greater than a preset velocity threshold, determine the trigger time based on the action position and the position of the trigger device.

According to one or more embodiments of the present disclosure, in the data processing apparatus provided in the present disclosure, the object information comprises an object time and an object position, and the third determination module is specifically configured to:
the object position being matched with the position of the trigger device, and a time difference between the object time and the trigger time meeting a preset time range, determine that the object is the target object.

According to one or more embodiments of the present disclosure, in the data processing apparatus provided in the present disclosure, the time range comprises a first time sub-range, a second time sub-range, and a third time sub-range, wherein, the first time sub-range is lower than the second time sub-range, and the second time sub-range is lower than the third time sub-range, and the apparatus further comprises: a fifth determination module, configured to:
determine a first trigger result when the time difference is within the first time sub-range;
determine a second trigger result when the time difference is within the second time sub-range;
determine a third trigger result when the time difference is within the third time sub-range; and
determine a fourth trigger result when the time difference exceeds the third time sub-range.

According to one or more embodiments of the present disclosure, in the data processing apparatus provided in the present disclosure, the apparatus further comprises:
an obtaining module, configured to obtain a score range corresponding to each time sub-range; and
a calculation module, configured to calculate on the basis of each time sub-range, each score range and the time difference to obtain a trigger score of each trigger result.

According to one or more embodiments of the present disclosure, in the data processing apparatus provided in the present disclosure, the playing module is specifically configured to:
display text information and a trigger score corresponding to a trigger result and/or switch a display state of the target object.

According to one or more embodiments of the present disclosure, there is provided another data processing method, comprising:
determining an action position and an action velocity direction on the basis of an action signal;
determining a target object, wherein object information of the target object is matched with the action position, and the object information comprises an object direction and an object position; and
playing an effect corresponding to the target object based on the action velocity direction and a direction of the target object.

According to one or more embodiments of the present disclosure, in the data processing method provided in the present disclosure, the object direction is associated with the object position.

According to one or more embodiments of the present disclosure, in the data processing method provided in the present disclosure, the object information further comprises: an object time, and the method further comprises:
determining a trigger time according to the action position and a position of a trigger device; and
the determining the target object comprises:
   the object position being matched with the position of the trigger device, and a time difference between the object time and the trigger time meeting a preset time range, determining that the object is the target object.

According to one or more embodiments of the present disclosure, in the data processing method provided in the present disclosure, the trigger device comprises a plurality of trigger sections, and the method further comprises:
determining a target trigger section from the plurality of trigger sections according to the position of the trigger device; and
playing a trigger effect at a position of the target trigger section.

According to one or more embodiments of the present disclosure, in the data processing method provided in the present disclosure, the trigger device comprises a plurality of trigger sections, and the method further comprises:
determining a target trigger section from the plurality of trigger sections based on the position of the trigger device, and obtaining a center position of the target trigger section;
calculating a distance difference between the position of the trigger device and the center position; and
determining a trigger score on the basis of the distance difference and a preset distance range.

According to one or more embodiments of the present disclosure, in the data processing method provided in the present disclosure, the method further comprises:
determining a trigger score based on the time difference and a preset time range.

According to one or more embodiments of the present disclosure, in the data processing method provided by the present disclosure, the playing the effect corresponding to the target object according to the action velocity direction and the direction of the target object, comprises:
determining an included angle absolute value on the basis of the action velocity direction and a normal to the direction of the target object; and
determining the effect corresponding to the target object according to the included angle absolute value and playing the effect.

According to one or more embodiments of the present disclosure, in the data processing method provided in the present disclosure, the determining the effect corresponding to the target object based on the included angle absolute value and playing the effect, comprises:
when the included angle absolute value is less than a preset included angle threshold, displaying text information and a trigger score corresponding to a trigger result and/or switching a display state of the target object.

According to one or more embodiments of the present disclosure, the present disclosure provides another data processing apparatus, comprising:
a first determination module, configured to determine an action position and an action velocity direction on the basis of an action signal;
a second determination module, configured to determine a target object, wherein object information of the target object is matched with the action position, and the object information comprises an object direction and an object position; and
a playing module, configured to play an effect corresponding to the target object based on the action velocity direction and a direction of the target object.

According to one or more embodiments of the present disclosure, in the data processing apparatus provided in the present disclosure, the object direction is associated with the object position.

According to one or more embodiments of the present disclosure, in the data processing apparatus provided in the present disclosure, the object information further comprises: an object time, and the method further comprises:
determining a trigger time based on the action position and a position of a trigger device; and
the second determination module is specifically configured to: the object position being matched with the position of the trigger device, and a time difference between the object time and the trigger time meeting a preset time range, determine that the object is the target object.

According to one or more embodiments of the present disclosure, in the data processing apparatus provided in the present disclosure, the trigger device comprises a plurality of trigger sections, and the apparatus further comprises:
a third determination module, configured to determine a target trigger section from the plurality of trigger sections according to the position of the trigger device; and
a trigger module, configured to play a trigger effect at a position of the target trigger section.

According to one or more embodiments of the present disclosure, in the data processing apparatus provided in the present disclosure, the trigger device comprises a plurality of trigger sections, and the apparatus further comprises:
a fourth determination module, configured to determine a target trigger section from the plurality of trigger sections according to the position of the trigger device, and obtain a center position of the target trigger section;
a calculation module, configured to calculate a distance difference between the position of the trigger device and the center position; and
a fifth determination module, configured to determine a trigger score on the basis of the distance difference and a preset distance range.

According to one or more embodiments of the present disclosure, in the data processing apparatus provided in the present disclosure, the apparatus further comprises:
a sixth determination module, configured to determine a trigger score according to the time difference and a preset time range.

According to one or more embodiments of the present disclosure, in the data processing apparatus provided in the present disclosure, the playing module comprises:
a determination unit, configured to determine an included angle absolute value on the basis of the action velocity direction and a normal to the direction of the target object; and
a playing unit, configured to determine the effect corresponding to the target object based on the included angle absolute value and play the effect.

According to one or more embodiments of the present disclosure, in the data processing apparatus provided in the present disclosure, the playing unit is specifically configured to:
when the included angle absolute value is less than a preset included angle threshold, display text information and a trigger score corresponding to a trigger result and/or switch a display state of the target object.

According to one or more embodiments of the present disclosure, the present disclosure provides an electronic device, comprising:
a processor; and
a memory configured to store instructions executable by the processor,
the processor being configured to read the executable instructions from the memory and execute the instructions to implement any of the data processing methods according to the present disclosure.

According to one or more embodiments of the present disclosure, the present disclosure provides a computer-readable storage medium having thereon stored a computer program for performing any of the data processing methods according to the present disclosure.

According to one or more embodiments of the present disclosure, the present disclosure provides a computer program product, comprising: instructions which, when executed by a processor, cause the processor to perform any of the data processing methods according to the present disclosure.

According to one or more embodiments of the present disclosure, the present disclosure provides a computer program, comprising: instructions which, when executed by a processor, cause the processor to perform any of the data processing methods according to the present disclosure.

The foregoing description is only illustration of the preferred embodiments of the present disclosure and the technical principles employed. It should be appreciated by those skilled in the art that the disclosure scope involved in the present disclosure is not limited to the technical solutions formed by specific combinations of the above technical features, but also encompasses other technical solutions formed by arbitrary combinations of the above technical features or equivalent features thereof without departing from the above disclosed concepts, for example, a technical solution formed by performing mutual replacement between the above features and technical features having similar functions to those disclosed (but not limited to) in the present disclosure.

Furthermore, while operations are depicted in a specific order, this should not be understood as requiring that these operations be performed in the specific order shown or in a sequential order. Under certain circumstances, multitasking and parallel processing might be advantageous. Similarly, while several specific implementation details are included in the above discussion, these should not be construed as limitations on the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combination.

Although the subject matter has been described in language specific to structural features and/or method logical actions, it should be understood that the subject matter defined in the attached claims is not necessarily limited to the specific features or actions described above. Rather, the specific features and actions described above are only example forms of implementing the claims.

## Claims

1. A data processing method, comprising:
determining an action position on the basis of a first action signal;
determining a second action posture on the basis of a second action signal; and
executing an operation instruction based on the action position and the second action posture.

2. The data processing method according to claim 1, wherein
the first action signal is a six-degree-of-freedom action signal; and/or
the second action signal is a three-degree-of-freedom action signal.

3. The data processing method according to claim 1 or 2, wherein the method further comprises:
determining a first action posture on the basis of the first action signal; and
the executing the operation instruction based on the action position and the second action posture, comprises:
executing the operation instruction based on the action position, the first action posture, and the second action posture.

4. The data processing method according to any of claims 1-3, wherein the method further comprises:
determining the first action signal based on action data of a first device; and
determining the second action signal based on action data of a second device.

5. The data processing method according to any of claims 1-4, wherein the executing an operation instruction based on the action position and the second action posture, comprises:
executing a first operation instruction based on the action position; and
executing a second operation instruction based on the second action posture.

6. The data processing method according to claim 5, wherein
the first operation instruction corresponds to first display content of a display device, the first display content being determined based on a position and posture of the display device; and
the second operation instruction corresponds to second display content of the display device, the second display content being determined based on the posture of the display device, or the second display content being display content at a preset position.

7. The data processing method according to claim 5 or 6, wherein the executing the first operation instruction based on the action position, comprises:
the action position being matched with a first operation position of a first target object, playing an effect corresponding to the first target object;
the method further comprises:
determining a second action time on the basis of the second action signal; and
the executing the second operation instruction based on the second action posture, comprises:
the second action time being matched with an operation effective time of a second target object, and the action posture being matched with a second operation position of the second target object, playing an effect corresponding to the second target object.

8. The data processing method according to claim 5 or 6, wherein the executing the first operation instruction based on the action position, comprises:
the action position being matched with an operation trajectory within an operation effective time, playing a first operation effect; and
the executing the second operation instruction based on the second action posture, comprises:
the second action posture meeting a preset condition within the operation effective time, playing a second operation effect.

9. The data processing method according to claim 8, wherein the method further comprises:
displaying an operation prompt identification within the operation effective time.

10. The data processing method according to claim 8 or 9, wherein the method further comprises:
displaying a position identification associated with the action position.

11. The data processing method according to any of claims 1-10, wherein the executing the operation instruction based on the second action posture and the action position, comprises:
executing the operation instruction corresponding to the action position and the second action posture.

12. The data processing method according to any of claims 1-11, wherein the executing the operation instruction corresponding to the action position and the second action posture, comprises:
when the second action posture meets a preset condition, executing an operation instruction corresponding to the action position; or
the method further comprises:
determining a first action posture on the basis of the first action signal; and
the executing the operation instruction corresponding to the action position and the second action posture, comprises:
when the second action posture meets a preset condition, executing an operation instruction corresponding to the first action posture and the action position.

13. The data processing method according to claim 1, wherein the executing the operation instruction corresponding to the action position and the second action posture, comprises:
executing the operation instruction corresponding to the action position, and displaying a real-time execution result;
and
when the second action posture meets a preset condition, obtaining an execution result at a current time.

14. A data processing apparatus, comprising:
a first determination module, configured to determine an action position on the basis of a first action signal;
a second determination module, configured to determine a second action posture on the basis of a second action signal; and
a processing module, configured to execute an operation instruction based on the action position and the second action posture.

15. A data processing method, comprising:
determining a first action time and a first action posture on the basis of a received action signal;
determining a target object, wherein object information of the target object is matched with the first action time and the first action posture; and
playing a first processing effect corresponding to the target object.

16. The data processing method according to claim 15, wherein the data processing method is applied to a head-mounted display device, and further comprises:
displaying, in a virtual reality scene, the target object, a ground of the virtual reality scene being aligned with that of a reality scene.

17. The data processing method according to claim 16, wherein the virtual reality scene comprises a virtual object, and the method further comprises:
controlling display of the virtual object on the basis of the action signal.

18. The data processing method according to any of claims 15-17, wherein the action signal comprises: a time stamp, an acceleration signal, and an angular velocity signal, and the determining the first action time and the first action posture on the basis of the received action signal, comprises:
determining the first action time and the first action posture on the basis of the time stamp, the acceleration signal, and the angular velocity signal.

19. The data processing method according to claim 18, wherein the action signal further comprises: a magnetometer signal, and the method further comprises:
determining the first action time and the first action posture on the basis of the time stamp, the acceleration signal, the angular velocity signal, and the magnetometer signal.

20. The data processing method according to any of claims 15-19, wherein the method further comprises:
receiving the action signal sent by an action tracking device.

21. The data processing method according to any of claims 15-20, wherein the object information comprises a first action effective time and an object position, and the determining the target object comprises:
the first action time being matched with the first action effective time, and the first action posture being matched with the object position, determining that the object is the target object.

22. The data processing method according to claim 21, wherein the object information further comprises a second action effective time, and the method further comprises:
determining a second action time and a second action posture on the basis of the received action signal; and
when the second action time is matched with the second action effective time and the second action posture is matched with the object position, playing a second processing effect corresponding to the target object.

23. The data processing method according to claim 16, wherein the method further comprises:
displaying, on the ground of the virtual reality scene, an associated object of the object, wherein, the associated object is associated with the object position.

24. The data processing method according to claim 23, wherein the method further comprises:
switching a display state of the associated object at a position corresponding to the first action posture.

25. The data processing method according to claim 21 or 22, wherein the method further comprises:
displaying the target object at the first action effective time at the object position.

26. The data processing method according to any of claims 15-25, wherein the playing the first processing effect corresponding to the target object, comprises:
playing a sound effect corresponding to the target object and/or switching a display state of the target object.

27. The data processing method according to claim 21 or 22, wherein the method further comprises:
determining an action score for the target object on the basis of the first action time and the first action effective time, and displaying the action score.

28. The data processing method according to any of claims 15-27, wherein
the first action is a stepping action, and the first action posture is a posture of the stepping action.

29. The data processing method according to any of claims 15-28, wherein
the action signal is a three-degree-of-freedom signal.

30. A data processing apparatus, comprising:
a first determination module, configured to determine a first action time and a first action posture on the basis of a received action signal;
a second determination module, configured to determine a target object, wherein object information of the target object is matched with the first action time and the first action posture; and
a playing module, configured to play a first processing effect corresponding to the target object.

31. A data processing method, comprising:
displaying, in a virtual reality scene, a trigger device and a target object;
determining an action position on the basis of an action signal;
determining a trigger time based on the action position and a position of the trigger device;
determining the target object, wherein object information of the target object is matched with the trigger time and the position of the trigger device; and
playing an effect corresponding to the target object.

32. The data processing method according to claim 31, wherein the method further comprises:
playing a trigger effect at the position of the trigger device at the trigger time.

33. The data processing method according to claim 32, wherein the trigger device comprises a plurality of trigger sections, and the playing the trigger effect at the position of the trigger device, comprises:
determining a target trigger section from the plurality of trigger sections based on the position of the trigger device; and
triggering the effect at a position of the target trigger section.

34. The data processing method according to any of claims 31-33, wherein the method further comprises:
determining an action velocity based on the action signal; and
when the action velocity is greater than a preset velocity threshold, determining the trigger time based on the action position and the position of the trigger device.

35. The data processing method according to any of claims 31-34, wherein the object information comprises an object time and an object position, and the determining the target object comprises:
the object position being matched with the position of the trigger device, and a time difference between the object time and the trigger time meeting a preset time range, determining that the object is the target object.

36. The data processing method according to claim 35, wherein the time range comprises a first time sub-range, a second time sub-range, and a third time sub-range, wherein, the first time sub-range is lower than the second time sub-range, and the method further comprises:
determining a first trigger result when the time difference is within the first time sub-range;
determining a second trigger result when the time difference is within the second time sub-range;
determining a third trigger result when the time difference is within the third time sub-range; and
determining a fourth trigger result when the time difference exceeds the third time sub-range.

37. The data processing method according to claim 36, wherein the method further comprises:
obtaining a score range corresponding to each time sub-range; and
calculating on the basis of each time sub-range, each score range, and the time difference, to obtain a trigger score of each trigger result.

38. The data processing method according to any of claims 31-37, wherein the playing the effect corresponding to the target object, comprises:
displaying text information and a trigger score corresponding to a trigger result and/or switching a display state of the target object.

39. A data processing apparatus, comprising:
a display module, configured to display, in a virtual reality scene, a trigger device and a target object;
a first determination module, configured to determine an action position on the basis of an action signal;
a second determination module, configured to determine a trigger time based on the action position and a position of the trigger device;
a third determination module, configured to determine the target object, wherein object information of the target object is matched with the trigger time and the position of the trigger device; and
a playing module, configured to play an effect corresponding to the target object.

40. A data processing method, comprising:
determining an action position and an action velocity direction on the basis of an action signal;
determining a target object, wherein object information of the target object is matched with the action position, and the object information comprises an object direction and an object position; and
playing an effect corresponding to the target object based on the action velocity direction and a direction of the target object.

41. The data processing method according to claim 40, wherein
the object direction is associated with the object position.

42. The data processing method according to claim 40 or 41, wherein the object information further comprises: an object time, and the method further comprises:
determining a trigger time based on the action position and a position of a trigger device; and
the determining the target object comprises:
the object position being matched with the position of the trigger device, and a time difference between the object time and the trigger time meeting a preset time range, determining that the object is the target object.

43. The data processing method according to claim 42, wherein the trigger device comprises a plurality of trigger sections, and the method further comprises:
determining a target trigger section from the plurality of trigger sections based on the position of the trigger device; and
playing a trigger effect at a position of the target trigger section.

44. The data processing method according to claim 42 or 43, wherein the trigger device comprises a plurality of trigger sections, and the method further comprises:
determining a target trigger section from the plurality of trigger sections based on the position of the trigger device, and obtaining a center position of the target trigger section;
calculating a distance difference between the position of the trigger device and the center position; and
determining a trigger score on the basis of the distance difference and a preset distance range.

45. The data processing method according to claim 43, wherein the method further comprises:
determining a trigger score based on the time difference and a preset time range.

46. The data processing method according to any of claims 40-45, wherein the playing the effect corresponding to the target object based on the action velocity direction and the direction of the target object, comprises:
determining an included angle absolute value on the basis of the action velocity direction and a normal to the direction of the target object; and
determining the effect corresponding to the target object based on the included angle absolute value and playing the effect.

47. The data processing method according to claim 46, wherein the determining the effect corresponding to the target object based on the included angle absolute value and playing the effect, comprises:
when the included angle absolute value is less than a preset included angle threshold, displaying text information and a trigger score corresponding to a trigger result and/or switching a display state of the target object.

48. A data processing apparatus, comprising:
a first determination module, configured to determine an action position and an action velocity direction on the basis of an action signal;
a second determination module, configured to determine a target object, wherein object information of the target object is matched with the action position, and the object information comprises an object direction and an object position; and
a playing module, configured to play an effect corresponding to the target object based on the action velocity direction and a direction of the target object.

49. An electronic device, comprising:
a processor; and
a memory configured to store instructions executable by the processor,
the processor being configured to read the executable instructions from the memory and execute the instructions to implement the data processing method according to any of claims 1-13, 15-29, 31-38, 40-48.

50. A computer-readable storage medium having thereon stored a computer program for performing the data processing method according to any of claims 1-13, 15-29, 31-38, 40-48.

51. A computer program product, comprising: instructions which, when executed by a processor, cause the processor to implement the data processing method according to any of claims 1-13, 15-29, 31-38, 40-48.

52. A computer program, comprising: instructions which, when executed by a processor, cause the processor to implement the data processing method according to any of claims 1-13, 15-29, 31-38, 40-48.
